(19) **Europäisches Patentamt**
**European Patent Office**
**Office européen des brevets**

(11) **EP 1 795 938 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(51) Int Cl.:
*G02B 21/00* (2006.01)   *G02B 21/16* (2006.01)
*G01N 21/64* (2006.01)   *G02B 27/10* (2006.01)
*G02B 27/14* (2006.01)

(21) Anmeldenummer: **06023598.3**

(22) Anmeldetag: **14.11.2006**

(54) **Verfahren und Anordnung zur Untersuchung von Proben**

Method and device for examining samples

Procédé et agencement destinés à l'analyse d'échantillons

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.12.2005 DE 102005059338**

(43) Veröffentlichungstag der Anmeldung:
**13.06.2007 Patentblatt 2007/24**

(73) Patentinhaber: **Carl Zeiss MicroImaging GmbH**
**07745 Jena (DE)**

(72) Erfinder:
• **Wilhelm, Stefan**
**07743 Jena (DE)**
• **Simbürger, Eva, Dr.**
**14482 Potsdam (DE)**

• **Kempe, Michael, Dr.**
**07751 Jena (DE)**

(74) Vertreter: **Käckell, Peter et al**
**Geyer, Fehners & Partner (G.b.R.)**
**Sellierstraße 1**
**07745 Jena (DE)**

(56) Entgegenhaltungen:
EP-A- 1 308 715      EP-A- 1 396 739
EP-A- 1 591 825      EP-A1- 0 148 803
EP-A1- 0 548 830     WO-A-02/12863
DE-A1- 10 137 158    DE-A1- 10 339 311
DE-A1- 19 829 944    DE-A1- 19 835 070
DE-A1- 19 835 072    US-A- 5 105 304
US-A1- 2002 109 840  US-A1- 2004 218 174
US-B1- 6 396 053

**Beschreibung**

Die Erfindung betrifft ein Verfahren, bei dem Proben mit einem Mikroskop untersucht werden und zur Beleuchtung der Probe räumlich kohärentes Licht in mindestens einem kontinuierlichen oder einem kontinuierlich durchstimmbaren Wellenlängenbereich erzeugt wird, in Abhängigkeit von der Probe und/oder einer vorgegebenen Untersuchungsmethode ein oder mehrere Wellenlängen oder Wellenlängenbereiche des Beleuchtungslicht ausgewählt werden, die Probe mit Beleuchtungslicht der ausgewählten Wellenlängen oder Wellenlängenbereiche beleuchtet wird, Beleuchtungslicht und von der Probe kommendes Emissionslicht in verschiedene Strahlengänge getrennt werden, von der Probe zurückgestrahltes Beleuchtungslicht im Detektionsstrahlengang vor der Detektion unterdrückt wird, und das Emissionslicht detektiert wird. Die Erfindung betrifft weiterhin auch Mikroskope mit denen eine Probe - insbesondere mittels eines solchen Verfahrens - analysiert wird. Sie beschäftigt sich mit dem Problem des Einsatzes von Lichtquellen, die räumlich kohärentes Licht in einem breiten Wellenlängenbereich abstrahlen, in der Mikroskopie, insbesondere in der Fluoreszenzmikroskopie mit Laser-Scanning-Technologie, und den dabei auftretenden Problemen bei der Bildgebung.

Die Verwendung von breitbandig emittierenden oder breitbandig durchstimmbaren Lichtquellen in der Laser-Scanning-Mikroskopie erfreut sich in letzter Zeit immer größeren Interesses, ihr Vorteil liegt in der freien Wahl der Wellenlänge. Dies ermöglicht eine flexiblere Einstellung der verschiedenen Wellenlängen, die zur Anregung von Farbstoffen, mit denen die zu untersuchenden Proben markiert sind, benötigt werden. Der Einsatz solch breitbandiger, räumlich kohärentes Licht ausstrahlender Quellen ist beispielsweise in der US 6,611,643 beschrieben. In dieser Schrift ist eine Mikroskopanordnung offenbart, die als Lichtquelle einen Laser aufweist, dessen Strahlung in eine mikrostrukturierte Faser eingekoppelt wird, in der breitbandiges Licht generiert wird. Allerdings fehlen darin Ausführungen dazu, wie das Mikroskop selbst zu gestalten ist, um das breitbandige Licht in geeigneter Weise für verschiedene Untersuchungsmethoden verwendbar zu machen.

Statt mit Hilfe mikrostrukturierter Fasern läßt sich breitbandiges Licht auch unter Ausnutzung spezieller Eigenschaften, dotierter Glasfasern erzeugen, die besser beherrscht werden als die oben erwähnten mikrostrukturierten Fasern. Solche Verfahren sind beispielsweise im Artikel von Tauser und Koautoren in "Optical Letters" Bd. 29 auf den Seiten 516 bis 518 beschrieben.

Ein breitbandiger Laserilluminator wird auch in der US 6,796,699 beschrieben. Auch hier werden jedoch - abgesehen von einem allgemeinen Verweis auf die Möglichkeit der Anpassung des Illuminators - keine konkreten technischen Ausführungen zur Adaption eines sollen Illuminators in der Mikroskopie beschrieben. In ähnlicher Weise wird in der DE 101 15 509 A1 nur die Kopplung mit einer Quelle mit spektraler Verbreiterung an ein Laser-Scanning-Mikroskop, im folgendem mit LSM abgekürzt, nur sehr allgemein beschrieben, wobei die Verwendung von akusto-optischen Filtern (AOTF), akusto-optischen Deflektoren (AOD), akusto-optischen Strahlteilern oder LCD-Abschwächern summarisch aufgeführt wird.

In der US 6,654,166 wird die Beleuchtung eines LSM mit einer Beleuchtungseinheit beschrieben, bei der die spektrale Verbreiterung ebenfalls mit einer mikrostrukturierten Faser sowie einem speziellen Strahlteiler erzeugt wird. Der Strahlteiler ist dabei ein zentrales Element im LSM, welches speziell an die Belange einer Bildgebung und Manipulation mit einer breitbandigen Lichtquelle angepaßt werden muß. Der in der US 6,654,166 beschriebene Strahlteiler ist als polarisations- und wellenlängenunabhängiges Element ausgelegt, was auch durch eine breitbandig reflektierende Beschichtung, beispielsweise aus Silber oder Aluminium, erreicht werden kann. Als Nachteil bei dieser Ausführung ist jedoch zu bemerken, daß erhebliche Verluste im Detektionsstrahlengang entstehen. Insbesondere in der Fluoreszenzmikroskopie können diese Verluste dazu führen, daß die Methode versagt.

In Verbindung mit einem breitbandig emittierenden oder breitbandig durchstimmbaren Laser wird ein entsprechend geeigneter flexibler Hauptfarbteiler benötigt, der das Anregungslicht vom zu detektierenden Licht trennt. Ein flexibler Hauptfarbteiler, der im sichtbaren Spektralbereich operiert und durch ein akusto-optisches Bauteil realisiert wird, ist der akusto-optische Strahlteiler (AOBS) wie er beispielsweise in der DE 103 39 311 A1 beschrieben wird. Für eine kontinuierlich durchstimmbare oder breitbandige Anregung vom ultravioletten bis zum nahinfraroten Spektralbereich ist ein solcher AOBS jedoch nicht geeignet. Für den genannten Spektralbereich werden mindestens drei verschiedene Geometrien bzw. Ausführungsformen benötigt. Ein solcher AOBS, der für eine Anregung mit schmalbandigen Laserlinien ausgelegt ist, besitzt außerdem nur eine geringe spektrale Selektionsbreite und damit gerade in bezug auf eine breitbandige Lichtquelle eine geringe Effizienz. Eine flexible Anpassung eines kontinuierlichen Spektrums an eine Untersuchungsmethode ist damit unmöglich. Dieser Nachteil, daß nur eine oder mehrere diskrete Linien des Spektrums zur Anregung selektiert werden können, trifft auch auf Hauptfarbteiler zu, die zur spektralen Trennung eine Polarisationsdrehung mittels AOTF benutzen.

Dieser Nachteil läßt sich durch Aufbauten, die eine kontinuierliche spektrale Aufspaltung des Lichts und gleichzeitig eine bezüglich der spektralen Lage definierbare Manipulation in diesem Spektrum ermöglichen, vermeiden. Solche Aufbauten werden beispielsweise in der DE 19 15 102 und der DE 100-17 825 vorgeschlagen. Die dort beschriebene Anordnung hat dabei jedoch den entscheidenden Nachteil, daß drei Prismenspektrometer - je eines vor und nach dem teilenden Element im Anregungsstrahlengang und eines im Detektionsstrahlengang - erforderlich sind. Dies erhöht deutlich die Komplexität und Störanfälligkeit der Anordnung. Sie ist zudem auf ein paralleles Konfokalmikroskop mit Streifenbeleuchtung beschränkt. Die in der DE 100 17 825 vorgestellte Variante hat darüber hinaus den Nachteil, daß über feste Elemente diskrete, vorab definierte Wellenlängebereiche getrennt und detektiert werden.

Die oben beschriebenen Lösungen lassen es daher nicht zu, daß volle Potential einer breitbandig emittierenden oder breitbandig durchstimmbaren Lichtquelle im Hinblick auf die möglichen Applikationen zu nutzen. Die Beleuchtungswellenlängen, mit denen beispielsweise die Farbstoffe, mit denen die Probe markiert ist, zur Emission angeregt werden sollen, sind nur eingeschränkt wählbar. Gleiches gilt für die zu detektierenden Spektralbereiche, bei denen sich die Lösungen im Stand der Technik allein auf das Blocken diskreter Anregungslinien beschränken.

Bei dem oben genannten Stand der Technik zur Kopplung einer breitbandigen Lichtquelle mit einem LSM und zur Strahltrennung in einem LSM wird darüber hinaus keine Ausführung dazu gemacht, wie eine flexible Methode zur - insbesondere in bezug auf die Bildgebung - optimalen Auswahl von Beleuchtungs- und Detektionswellenlängen bzw. -bändern konkret aussehen soll und es werden keine entsprechenden Anordnungen beschrieben. Eine solche Methode wird in der DE 103 39 311 A1 beschrieben. Beleuchtungs- und Detektionswellenlängen werden dabei mittels der Charakteristika der Farbstoffe, mit denen die Probe markiert ist, anhand des Vergleichs mit einer Datenbank ausgewählt. Beleuchtungs- und Detektionsspektralbereiche werden dabei allein aufgrund von Berechnungen auf Basis der in den Datenbanken abgelegten Einzelspektren berechnet. Als Ergebnis erhält man eine Einstellung, die rein theoretisch ideal sein sollte. Allerdings können dabei viele objektspezifische Faktoren, die erheblichen Einfluß auf die Meßergebnisse haben können, nicht berücksichtigt werden. Dazu zählt beispielsweise die Abhängigkeit der Anregungs- und Emissionsspektren von der Umgebung des Farbstoffes, wie sie auch im Stand der Technik in Wellenlängenverhältnismessungen schon seit längerem benutzt wird, wie beispielsweise im Artikel von Tsien, Annu.Rev.Neurosci.12 (1989), Seite 227ff. beschrieben. Ein weiteres Beispiel ist das Auftreten unbekannter Fluorophore im Objekt, die - wie bei der sogenannten Autofluoreszenz - zu unerwünschten Kreuzanregungen führen können.

Die Aufgabe der Erfindung besteht daher darin, ein Verfahren wie oben beschrieben und Mikroskope, bei denen zur Beleuchtung der Probe räumlich kohärentes Licht in mindestens einem kontinuierlichen oder kontinuierlich durchstimmbaren Wellenlängenbereich erzeugt wird, dahingehend weiterzuentwickeln, daß solche objektspezifischen Faktoren besser berücksichtigt werden.

Diese Aufgabe wird bei einem Verfahren der eingangs beschriebenen Art dadurch gelöst, daß die Auswahl der Wellenlängen oder Wellenlängenbereiche des Beleuchtungslichts mit der Trennung des Detektions- und des Beleuchtungslichts und der Unterdrückung des Beleuchtungslichts so abgestimmt wird, daß eine vorgegebene Regelgröße R ein Extremum annimmt. In diesem Fall wird dann eine für den Benutzer optimale Bildgebung erreicht, d.h. die Abstimmung ist in bezug auf die Bildgebung optimiert.

Im einfachsten Fall kann beispielsweise die Intensität des von der Probe kommenden Lichts als Regelgröße verwendet werden. Diese hängt in einem gewöhnlichen Auflichtmikroskop beispielsweise vom Absorptions-, Emissions- oder Reflexionsverhalten der Probe ab. Diese Eigenschaften hängen wiederum davon ab, mit welchen Wellenlängen die Probe bestrahlt wird. Bevorzugt wird die Probe jedoch rastermikroskopisch untersucht.

In einer bevorzugten Ausführung der Erfindung ist die Probe mit einem oder mehreren Farbstoffen markiert. Die Farbstoffe werden dann durch das Beleuchtungslicht zur Emission angeregt und das emittierte Licht wird als Emissionslicht detektiert. Dabei ist die oben erwähnte optimierte Abstimmung von Beleuchtung und Detektion insbesondere dann sehr sinnvoll, wenn die zu detektierenden Wellenlängen oder Wellenlängenbereiche des Emissionslichts mindestens teilweise in den Wellenlängenbereich des Beleuchtungslichts fallen, also beispielsweise sowohl Emissionslicht als auch Beleuchtungslicht aus einander überlappenden Bereichen im visuellen Spektrum stammen.

Vorteilhaft werden zur Abstimmung die Wellenlängen oder Wellenlängenbereiche des Beleuchtungslichts in vorgegebenen Schritten variiert. Für jeden Schritt werden ein oder mehrere Bilder detektiert und wird anschließend die Regelgröße bestimmt, im allgemeinen anhand der registrierten Bilddaten. In jedem Schritt wird die Trennung von Detektions- und Beleuchtungslicht sowie die Unterdrückung des Beleuchtungslichts ebenfalls angepaßt, so daß sich zum Schluß für die Regelgröße R eine Kurve in Abhängigkeit von der Wellenlänge oder beispielsweise auch der mittleren Wellenlänge eines Wellenlängenteilbereichs ergibt. Denkbar sind verschiedene Regelgrößen, beispielsweise die mittlere Intensität eines Bildes, der Kontrast zwischen zwei ausgewählten Bildpunkten oder auch das Signal-Rausch-Verhältnis, wobei diese Größen maximiert werden.

In einer vorteilhaften Ausgestaltung der Erfindung erfolgt auch die Detektion spektral aufgelöst. Bevorzugt werden auch die zu detektierenden Spektralbereiche in die Abstimmung mit einbezogen, für jeden Schritt in bezug auf das Beleuchtungslicht werden diese ebenfalls variiert. Eine solche optimale Abstimmung der zu detektierenden Spektralbereiche ist insbesondere dann zweckmäßig, wenn wellenlängenabhängige Kreuzanregungen verschiedener Farbstoffe auftreten. Die optimale Abstimmung der Parameter aufeinander wird zweckmäßigerweise an einer mit der tatsächlichen Probe im wesentlichen identischen Referenzprobe durchgeführt, d.h. auf einer Probe, die mit denselben Farbstoffen markiert ist und deren chemische Umgebung dieselbe wie die der tatsächlichen Probe ist. Alternativ kann die Abstimmung auch an der Probe selbst durchgeführt werden, sofern Bleicheffekte eine untergeordnete Rolle spielen, d.h. die mittlere Farbstoffkonzentration im Bildfeld während der Abstimmung etwa gleich bleibt. Die Abstimmung kann im für die spätere Bildgebung relevanten Objektausschnitt durchgeführt werden. Bei über die für die optimale Abstimmung notwendige Zeit statischen Proben können dann die im Rahmen dieser Optimierung gewonnenen Bilder für eine Bildmittelung zur Verbesserung des Signal-Rausch-Verhältnisses (SNR) verwendet werden.

Für eine schnelle Abstimmung ist unter anderem die Startkonfiguration entscheidend, d.h. die anfängliche Einstellung von Wellenlängen bzw. Wellenlängenbereichen sowie gegebenenfalls der Detektionsspektralbereiche im Zusammenhang mit einer entsprechenden Einstellung der Komponenten im Mikroskop. Vorteilhaft werden dabei die Wellenlängen oder Wellenlängenbereiche des Beleuchtungslichts, die zum Anfang der Abstimmung eingestellt werden, anhand einer Datenbank ausgewählt. Gegebenenfalls werden auch die zu detektierenden Spektralbereiche vorab anhand einer Datenbank ausgewählt. In den Datenbanken werden dazu zweckmäßigerweise die Anregungs- und Emissionsspektren dieser Farbstoffe ggf. lösungsmittelabhängig abgelegt.

In einer vorteilhaften Ausgestaltung der Erfindung erfolgt die Auswahl der Wellenlängen oder der Wellenlängenbereiche des Beleuchtungslichts sowie gegebenenfalls der Spektralbereiche des Emissionslichts vollautomatisch, wobei es in der Regel zweckmäßig ist, wenn der Benutzer eine Startkonfiguration vorgibt. Dies kann entweder am Instrument selbst geschehen oder aber indem dem System, mit dem das Mikroskop gesteuert wird, die Farbstofftypen bekannt gemacht werden, so daß das System daraufhin eine geeignete Startkonfiguration aus der Datenbank auswählen kann. Sollten solche Daten nicht zur Verfügung stehen, kann es auch sinnvoll sein, daß der Benutzer die Wellenlängen oder Wellenlängenbereiche des Beleuchtungs- und Emissionslichts manuell auswählt.

Im einfachsten Fall, wenn beispielsweise die Probe nur mit einem einzigen Farbstoff markiert ist und es allein auf die Intensität des von der Probe zurückgestrahlten Laserlichts ankommt, verwendet man bevorzugt als Regelgröße R die Summe der mittleren Intensitäten über die detektierten Bilder in Abhängigkeit von den Wellenlängen oder Wellenlängenbereichen des Beleuchtungslichtes. Bei jedem Optimierungsschritt zur optimalen Abstimmung bzw. zur Bestimmung des Extremums der Regelgröße R wird also mindestens ein Bild aufgenommen. Alternativ können auch mehrere Ausgangskonfigurationen getestet werden, wozu es erforderlich ist, pro Optimierungsschritt mehr als ein Bild aufzunehmen. Für jedes Bild wird dessen mittlere Intensität berechnet und summiert.

Es gibt jedoch auch Fälle, bei denen diese einfache Wahl der Regelgröße versagt. Dies ist z.B. der Fall, wenn bei der Optimierung der Anregung eine Kreuzanregung mit weiteren Farbstoffen in Abhängigkeit von der Wellenlänge auftritt. Wird das Emissionslicht spektral aufgelöst detektiert und sind die Emissionsspektren der zusätzlich angeregten Farbstoffe bekannt, so kann eine spektrale Trennung erfolgen. Als Regelgröße verwendet man dann bevorzugt die Differenz der mittleren Intensitäten zweier oder mehrerer Spektralbereiche in den detektierten Bildern in Abhängigkeit von den Wellenlängen oder Wellenlängenbereichen des Beleuchtungslichts, i.d.R. aus verschiedenen Bildregionen.

Im vorgenannten Beispiel erfolgt die spektrale Trennung der Spektren rechnerisch. Ist nur ein zusätzlicher Farbstoff vorhanden, so genügt die Bestimmung der mittleren Intensität in zwei Spektralbereichen. Der erste Spektralbereich wird um das Emissionsmaximum des abzubildenden Farbstoffs herum festgelegt. Als mittlere Intensität ergibt sich dann beispielsweise ein Wert $I_s$. Als zweiten Spektralbereich wählt man den Bereich, in den in etwa die Emission des zusätzlichen Farbstoffs fallen, und bestimmt dort die mittlere Intensität $I_c$. Wird die Regelgröße mit R bezeichnet, so ergibt sich in diesem Fall $R = I_s - I_c$. Eine Variation bzw. Optimierung des Spektralbereichs für das Emissionslicht muß in diesem Fall nicht statt finden, der Bereich kann konstant bleiben. Auf eine umfängliche spektrale Auflösung kann auch ganz verzichtet werden, wenn eine spektrale Separation von gewünschtem Signal und Kreuzanregungssignal in mindestens zwei Kanäle ohne Probleme möglich ist.

In einer anderen Ausführung des Verfahrens verwendet man als Regelgröße die Differenz der mittleren Intensitäten zweier ausgewählter Regionen in den Bildern in Abhängigkeit von den Wellenlängen oder Wellenlängenbereichen des Beleuchtungslichtes. Dies ist insbesondere dann angebracht, wenn eine spektrale Trennung wie im oben genannten Beispiel nicht möglich ist. Eine erste Region wird dann beispielsweise als die Region definiert, die das gewünschte Signal enthält. Eine zweite Region im Bild wird als sogenannte Untergrundsregion definiert. In letzterer wird das störende Licht - im oben genannten Beispiel vorrangig die durch Kreuzanregung emittierte Intensität - detektiert, während in der ersten Region der wesentliche Anteil aus der Detektion der gewünschten Intensität herrührt. Bei beiden Intensitäten kann es sich beispielsweise um Fluoreszenzsignale handeln. Die Regelgröße R ergibt sich dann als Differenz der Intensitäten der ersten und zweiten Region, $R = I_1 - I_2$. Für eine einfachere Darstellung kann die Regelgröße au-ßerdem noch normiert werden, indem sie durch die Summe der beiden Intensitäten geteilt wird. Bevorzugt berücksichtigt man in der Regelgröße zusätzlich auch noch die gewichtete und normierte Intensität aus der ersten Region additiv, $w * I_1/I_1^{max}$. w ist dabei ein wählbarer Wichtungsfaktor. Auf diese Weise läßt sich in bezug auf die gewünschte Intensität bei der optimalen Abstimmung zusätzlich noch das Signal-Rausch-Verhältnis berücksichtigen.

Die Erfindung betrifft außerdem auch Mikroskope, die einen Licht eines Wellenlängenbereichs kontinuierlich emittierenden oder in diesem Bereich durchstimmbaren Laser als Beleuchtungsquelle, erste Auswahlmittel zur Selektion einer Wellenlänge, eines Wellenlängenteilbereichs, mehrerer Wellenlängen oder Wellenlängenbereiche des Beleuchtungslichts, Trennmittel zur Trennung der Strahlengänge von Beleuchtungslicht und Emissionslicht, das von der Probe kommt, Unterdrückungsmittel zur Verhinderung der Detektion von Beleuchtungslicht, das von der Probe zurückgestrahlt wird und in den Detektionsstrahlengang gelangt, sowie Detektionsmittel zur Detektion des Emissionslichts umfassen. Dabei sind Beleuchtungsquelle, erste Auswahlmittel, Trennmittel und Unterdrückungsmittel ansteuerbar und in bezug auf ihre wellenlängenselektiven Eigenschaften variabel einstellbar. Bei einem solchen Mikroskop wird die o.g. Aufgabe dadurch gelöst, daß eine Steuereinheit zur Ansteuerung und Abstimmung der ersten Auswahlmittel, der Trennmittel und der Unterdrückungsmittel aufeinander anhand einer Regelgröße R vorgesehen ist, so daß diese Regelgröße ein Extremum annimmt. Bevorzugt handelt es sich dabei um ein Laser-Scanning-Mikroskop, da sich dort mittels der Steuereinheit das so ausgestaltete Mikroskop optimal an die unterschiedlichen Untersuchungsmethoden und -bedingungen anpassen läßt.

Bevorzugt sind bei einem solchen Mikroskop Eingabemittel zur Eingabe oder Auswahl der Untersuchungsmethode und/oder der Probeneigenschaften vorgesehen. Dazu können beispielsweise die Farbstoffe zählen, mit denen die Probe markiert ist, oder ob spezielle Verfahren zur Anregung von Fluoreszenz wie Ein- und Mehrphotonenverfahren verwendet werden sollen. Im letzteren Fall kann eine zusätzliche Steuerung des Beleuchtungslichtes im Zusammenhang mit der Optimierung vorteilhaft sein, um beispielsweise die Pulsparameter des Lasers wie z.B. Pulsdauer und Pulswiederholrate zu beeinflussen.

Die Steuereinheit ist bevorzugt zur automatischen Abstimmung von den ersten Auswahlmitteln, den Trennmitteln und den Unterdrückungsmitteln ausgelegt. Nach Eingabe der Startkonfiguration wird beispielsweise durch die Steuereinheit automatisch ein Startwellenlängenteilbereich eingestellt, daran angepaßt wird die Durchlässigkeit der Trenn- und Unterdrückungsmittel geregelt. Im nächsten Schritt wird dies für eine andere Wellenlänge bzw. einen anderen Wellenlängenteilbereich wiederholt. Anschließend erfolgt in der Steuereinheit die Auswertung anhand des Vergleichs der für jede Konfiguration bestimmten Regelgröße, sowie der anschließenden Bestimmung des Extremums bzw. Optimums dieser Regelgröße. Die zu diesem Optimum gehörende Konfiguration wird dann eingestellt.

In einer weiteren vorteilhaften Ausgestaltung des Mikroskops sind Mittel zur spektralen Zerlegung des Emissionslichtes vorgesehen. Dies ermöglicht beispielsweise, das von einer mit mehreren Farbstoffen markierten Probe kommende Licht nach Farbstoffen getrennt aufzulösen. Dabei ist es zweckmäßig, zweite Auswahlmittel zur Auswahl eines oder mehrerer Wellenlängenbereiche, in denen das Emissionslicht detektiert wird, vorzusehen. Insbesondere dann, wenn sich die Wellenlängenbereiche des Beleuchtungslichts mit denen des Emissionslichts überlappen, ist eine solche Auswahl notwendig.

Bevorzugt ist die Steuereinheit auch zur Ansteuerung und Abstimmung des zweiten Auswahlmittels mit den ersten Auswahlmitteln, den Trennmitteln und den Unterdrückungsmitteln anhand der Regelgröße ausgelegt. Auch eine Kombination der zweiten Auswahlmittel mit den Unterdrückungsmitteln oder eine Integration in diese ist möglich. Auf diese Weise können die Wellenlängenbereiche sowohl für das Anregungs- als auch für das Emissionslicht in bezug auf ihre Lage, ihre Breite und ihre Intensität optimal aufeinander abgestimmt werden.

Bevorzugt sind bei den ersten Auswahlmitteln ein oder mehrere akusto-optische Filter, insbesondere akusto-optisch durchstimmbare Filter (AOTF) oder akusto-optisch durchstimmbare Modulatoren (AOM) vorgesehen. Der Vorteil der A-OTF- gegenüber der AOM-Technologie liegt vor allem darin, daß mehr als eine Wellenlänge bzw. ein Spektralbereich gleichzeitig aus einem breiten Spektrum über die Abspaltung in der ersten Beugungsordnung selektiert werden kann. Dies ist insofern eine wesentliche Eigenschaft, als Farbstoffe eine Anregung bei einer farbstoffabhängigen Spektralbreite zulassen und damit die verfügbare Laserleistung einer breitbandigen Laserquelle besser ausgenutzt werden kann. Im Zusammenhang mit der o.g. optimalen Abstimmung der Anregung ist daher eine möglichst große Flexibilität auch bezüglich der spektralen Breite vorteilhaft. AOTF nach dem Stand der Technik haben eine sehr geringe spektrale Breite bzw. eine hohe spektrale Schärfe im Bereich von 0,5 bis 2 nm. Denkbar sind aber auch technische Ausführungsformen solcher AOTF, die bei ansonsten identischen Eigenschaften größere spektrale Breiten realisieren, beispielsweise bei einer mittleren Wellenlänge von 490 nm eine Breite von 25 bis 30 nm und bei einer mittleren Wellenlänge von 670 nm eine Breite von 60 bis 65 nm. Die Breite des spektralen Fensters eines AOTF ist grundsätzlich eine nichtveränderbare Systemeigenschaft.

Ein AOM nach dem Stand der Technik realisiert eine größere spektrale Breite bei der jeweils eingestellten akusto-optischen Frequenz als ein AOTF. Die spektrale Breite liegt beispielsweise im nahen Infrarotbereich bei etwa 20 nm und im Bereich von etwa 490 bis 640 nm bei etwa 20 bis 40 nm. AOM sind im sichtbaren Bereich über etwa 150 nm durchstimmbar, dieser Bereich ist damit etwas kleiner als bei einem AOTF, welches über 250 nm durchstimmbar ist.

Um also einen größeren Spektralbereich oder mehrere kleinere Spektralbereiche auswählen zu können, werden die Filter, d.h. AOM und/oder AOTF daher bevorzugt in Reihe geschaltet, wobei jeder AOM und/oder AOTF eine andere Wellenlänge oder einen anderen Wellenlängenbereich auskoppelt. Zweckmäßigerweise sind dann Mittel zur Zusammenführung der ausgekoppelten Wellenlänge oder Wellenlängenbereiche vorgesehen. Beispielsweise können dazu dichroitische Strahlteiler verwendet werden, die vorzugsweise als Lang-, Kurz- oder Bandpaß ausgeführt sind. Falls es sich bei der Beleuchtungsquelle um einen Laser handelt, der sehr kurze Impulse aussendet und diese in der Objektebene für nichtlineare Probenwechselwirkungen verwendet werden sollen, so ist aufgrund des großen durchlaufenden Glasweges in den einzelnen Elementen - als Material kommt hier beispielsweise $TeO_2$ oder $SiO_2$ in Frage - eine Dispersionskompensation erforderlich, wie sie nach dem Stand der Technik mit Gitter- und Prismenstrecken realisiert werden kann.

In einer anderen bevorzugten Ausführung der Erfindung sind bei den ersten Auswahlmitteln ein oder mehrere variable einstellbare Flüssigkristallfilter vorgesehen. Auch mit solchen durchstimmbaren Flüssigkristallfiltern auf Basis elektrooptischer Funktionsmechanismen läßt sich das Beleuchtungslicht spektral selektieren. Zu diesen Flüssigkristallfiltern zählen z.B. die sogenannten *Liquid Crystal Tunable Filter* (LCTF). Bei LCTF sind Ausführungsformen für die Spektralbereiche von 400 bis 720 nm, 650 bis 1100 nm, 850 bis 1800 nm und von 1200 bis 2450 nm bekannt. Die Halbwertsbreite der jeweiligen Fenster, in denen Strahlung transmittiert wird, ist wie bei AOTF und AOM eine Systemkonstante und liegt für den erstgenannten Spektralbereich bei der unteren Wellenlänge von 400 nm im Bereich von 10 nm und bei der oberen Grenzwellenlänge von etwa 700 nm bei 45 nm. Eine Schaltfrequenz von ca. 50 Hz ermöglicht den schnellen Wechsel des Transmissionsbereichs, wobei nur ein Bereich zu einer Zeit wählbar ist.

Weiterhin sind auch Aufbauten auf Basis von Gittern, Prismen bzw. Monochromatoren im allgemeinen denkbar. In einer anderen Ausgestaltung des Mikroskops sind bei den ersten Auswahlmitteln ein oder mehrere variabel einstellbare Bandpaßfilter vorgesehen. Ein solcher durchstimmbarer Bandpaßfilter kann auf der Basis von entsprechend feingestuften Interferenzfiltern in Form von Langpaß- und Kurzpaßfiltern, wie beispielsweise in der DE 198 35 070 A1 beschrieben, konzipiert werden. Damit ist es nicht nur möglich, einen großen Wellenlängenbereich abzudecken, sondern zusätzlich auch die Breite des jeweiligen Bandpasses variabel zu halten. Kleinste Abstufungen einzelner Langpaß- bzw. Kurzpaß-Filter von 10 nm entsprechen dem Stand der Technik. Die Halbwertsbreiten des resultierenden Bandpasses liegen entsprechend ebenfalls in dieser Größenordnung. Eine feste Kopplung der Halbwertsbreite an die Wellenlänge, wie bei den oben beschriebenen elektrooptischen oder akusto-optischen Filterelementen besteht nicht, so daß eine gezielte Beeinflussung der spektralen Breite möglich ist. Ein solcher Bandpaßfilter kann selbstverständlich auch in Kombination mit den andern, oben beschriebenen Komponenten eingesetzt werden. Dies ist dann vorteilhaft, wenn auch die Intensität moduliert werden soll, da dies mit einem Bandpaßfilter nicht möglich ist.

Weitere Mittel zur Intensitätsmodulation sind neben einfachen Graufiltern - entweder diskret abgestuft auf einem drehbaren Rad angeordnet oder kontinuierlich als Verlaufsfilter - auch Polaristionsabschwächer auf Basis von achromatischen Verzögerungsplatten in Form von $\lambda/2$-Platten in Kombination mit Linear-Polarisationsfiltern oder Polarisationsstrahlteilern. Achromatische Verzögerungsplatten können Spektralbereiche von circa 250 nm im sichtbaren Spektralbereich und circa 500 nm im nahen Infrarotbereich abdecken. Andere Möglichkeiten bestehen in der Verwendung von einfachen Flüssigkristallfiltern. Solche Einheiten werden sinnvollerweise der spektralen Selektion vor- oder nachgeschaltet. Andere Möglichkeiten der Intensitätsmodulation bestehen in der Nutzung von Bauteilen auf Basis einer Polarisationsdrehung über magneto-optische Effekte, wie beispielsweise in Faraday-Rotatoren, oder über elektrooptische Effekte, wie beispielsweise in sogenannten Pokkels-Zellen. Selbstverständlich ist auch eine direkte Modulation der Laserquelle, sofern diese das gestattet, möglich.

Um das Beleuchtungslicht, mit dem die Farbstoffe angeregt werden, von der Emissionsstrahlung zu trennen, werden insbesondere in der Fluoreszenz-Mikroskopie mit Laser-Scanning-Mikroskopen sogenannte Hauptfarbteiler (HFT) eingesetzt. Ein solcher Hauptfarbteiler weist dabei funktionsbedingt drei Ein- und Ausgänge, sogenannte Ports auf. Am ersten Port gelangt das Licht der Laserquelle in den Hauptfarbteiler. Es tritt am zweiten Port aus dem HFT aus und wird zur Probe geleitet. Der zweite Port dient gleichzeitig als Eingang für das von der Probe kommende Licht, unter anderem auch für das durch die Wechselwirkung mit der Probe erzeugte Fluoreszenzlicht. Es wird im HFT spektral vom Laserlicht getrennt und über einen dritten Port zum Detektor geleitet.

Bevorzugt ist bei den Trennmitteln ein flexibler Hauptfarbteiler vorgesehen, in dem Beleuchtungslicht und Emissionslicht spektral zerlegt und in Abhängigkeit von der Wellenlänge modifiziert und umgelenkt werden. Durch die Modifikation in Abhängigkeit von der Wellenlänge ist es möglich, Anregungslicht und Emissionslicht effizient zu trennen und zum richtigen Port zu leiten. Dabei kann z.B. der optische Weg in Abhängigkeit von der Wellenlänge durch mechanische Elemente beeinflußt werden, wie beispielsweise in der DE 195 10 102, der DE 100 17 825, und der DE 198 42 288 beschrieben. Eine andere Möglichkeit besteht darin die Polarisation des Lichts mittels eines sogenannten *Spatial Light Modulators* (SLM), beispielsweise basierend auf Flüssigkristallen, zu beeinflussen.

In einer anderen bevorzugten Ausgestaltung ist bei den Trennmitteln ein achromatischer Hauptfarbteiler vorgesehen, in dem Beleuchtungslicht und Emissionslicht in räumlich unterschiedliche Bereiche abgebildet und umgelenkt werden. Im Gegensatz zum zuvor beschriebenen flexiblen Hauptfarbteiler können hier die spektralen Bänder nicht flexibel eingestellt werden, sondern die Trennung von Anregung und Detektion erfolgt breitbandig. In der Fluoreszenzmikroskopie mit einem Laser-Scanning-Mikroskop basiert diese Trennung auf der verschiedenen räumlichen Kohärenz von Anregungslicht und Fluoreszenz. Da das Anregungslicht räumlich kohärent ist, kann es in der Pupille in definierte Strukturen ausgeformt werden. Das räumlich inkohärente Fluoreszenzlicht auf der anderen Seite füllt die gesamte Pupille. Wird das Anregungslicht entsprechend geformt und nimmt man geeignet reflektierende oder transmittierende Strukturen im HFT zu Hilfe, läßt sich auf diese Weise das Anregungslicht wellenlängenunabhängig vollständig zur Probe und das Fluoreszenzlicht mit geringen Verlusten zum Detektor leiten.

Falls eine vollständige Trennung von Beleuchtungslicht und Emissionslicht mittels der vorher beschriebenen Elemente nicht möglich ist, weil beispielsweise die Wellenlänge des Beleuchtungslichts in einen zu detektierenden Spektralbereich fällt, so sieht man zweckmäßigerweise Unterdrückungsmittel vor, die verhindern, daß solches Licht zum Detektor gelangt. Bevorzugt ist bei den Unterdrückungsmitteln eine spektral selektive Blende vorgesehen, die zweckmäßigerweise variabel einstellbar ist. Eine solche Blende ist beispielsweise in der DE 103 40 020 beschrieben.

Bevorzugt läßt sich das oben beschriebene Verfahren und das Mikroskop in der Fluoreszenzspektroskopie oder Fluoreszenzkorrelationsspektroskopie, bei FRET- und FLIM-Analysen, bei der Untersuchung von Multiphotonen-Anregungen, bei der Identifizierung von Farbstoffen sowie allgemein bei der Manipulation von Proben einsetzen. Diese beispielhafte Aufzählung ist selbstverständlich nicht vollständig, und es sind weitere Anwendungen, insbesondere biomedizinische und dem Fachmann geläufige Verwendungen, denkbar.

Die Erfindung soll im folgenden anhand von Ausführungsbeispielen näher erläutert werden. In den dazugehörigen Zeichnungen zeigt:

Fig.1 den Verfahrensablauf bei festem Detektionswellenlängenbereich,

Fig.2a die Signalstärken zweier Signale aus verschiedenen Bereichen der Probe,

Fig.2b den Verlauf zweier möglicher Regelgrößen,

Fig.3 den Ablauf des Verfahrens bei variablem Detektionswellenlängenbereich,

Fig.4 eine Prinzipskizze für ein Mikroskop,

Fig.5 eine Beleuchtungsquelle zur Erzeugung von Beleuchtungslicht mit mehreren Wellenlängen bzw. Wellenlängenbereichen,

Fig.6 eine optimierte Einstellung der Wellenlängenbereiche für Beleuchtungs- und Emissionslicht für eine mit zwei Farbstoffen markierte Probe,

Fig.7 die Wellenlängenselektion durch Abstimmung des Beleuchtungslichtspektrums und des spektralen Durchlassbereiches eines AOTF,

Fig.8 eine Reihenschaltung mehrerer AOM,

Fig.9a die schematische Darstellung eines variablen Hauptstrahlteilers mit geometrischer Strahlteilung in Draufsicht,

Fig.9b die schematische Darstellung dieses variablen Hauptstrahlteilers in Seitenansicht,

Fig.10a die schematische Darstellung eines variablen Hauptstrahlteilers mit polarisationsoptischer Strahlteilung in Draufsicht,

Fig.10b die schematische Darstellung dieses variablen Hauptstrahlteilers in Seitenansicht,

Fig.11 Unterdrückungsmittel zur spektralen Selektion und Unterdrückung von Beleuchtungslicht vor der Detektion,

Fig.12 eine zweite Variante zur spektralen Selektion,

Fig.13 eine dritte Variante zur spektralen Selektion,

Fig.14 eine Anordnung zur Mehrlinienanregung mit wählbarer spektraler Breite,

Fig.15 eine weitere Anordnung zur Mehrlinienanregung mit variabel einstellbarer spektraler Breite, und

Fig.16 eine Anordnung zur Kombination von durchstimmbarer Einphotonen- und Multiphotonenanregung.

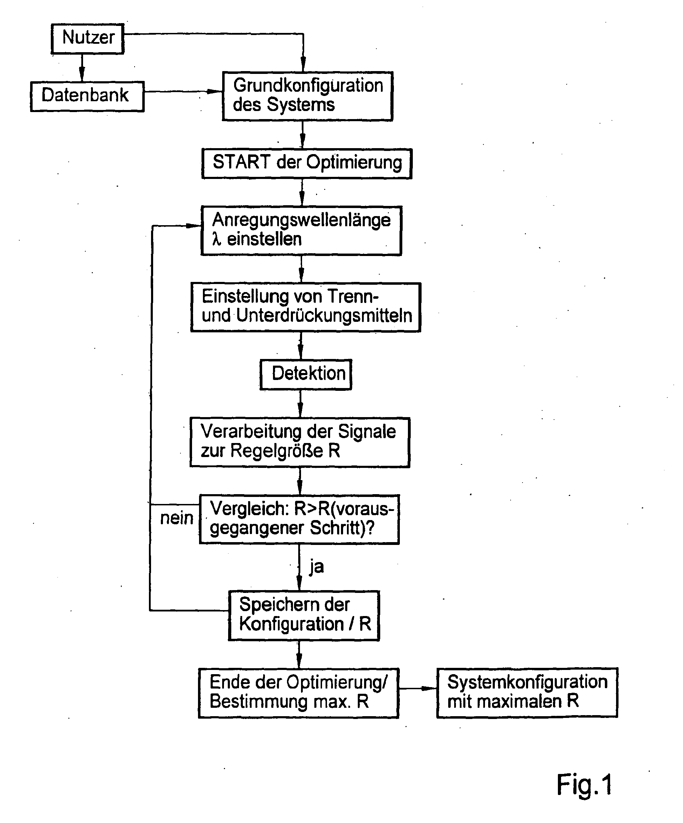

In Fig.1 ist der Verfahrensablauf für eine Optimierung der Anregungswellenlängen bei festem Detektionswellenlängenbereich dargestellt. Der Nutzer kann die Grundkonfiguration des Systems für den Start der Optimierung entweder selbst vornehmen oder unter Eingabe der in der Probe vorhandenen Farbstoffe eine Datenbank mit abgelegten Emissions- und Detektionsspektren nutzen. Im letzteren Fall wird auf der Grundlage der Datenbankinformationen die Grundkonfiguration des Systems automatisch vorgenommen. Die weiteren Optimierungsparameter wie Schrittweite, Anregungs- und Detektionsbänder werden vom System automatisch eingestellt. Eine Kontrolle und Bearbeitung dieser Einstellungen durch den Nutzer vor dem Start der Optimierung ist möglich, jedoch nicht zwingend erforderlich. Im hier dargestellten Beispiel für eine fluoreszenzmikroskopische Messung wird im Rahmen der Optimierung - die entweder an -einer Referenzprobe oder an der zu untersuchenden Probe selbst durchgeführt wird - die Anregungswellenlänge $\lambda$ im Rahmen der vorgegebenen Schrittweite variiert. Alternativ kann auch ein Wellenlängenbereich variiert werden, auch die Variation mehrerer Wellenlängenbereiche ist möglich. Entsprechend der eingestellten Wellenlänge werden im Beispiel dann Trenn- und Unterdrükkungsmittel angepaßt und es erfolgt die Detektion des von der Probe zurückgestrahlten Lichts. Zweckmäßigerweise wird dabei ein vollständiges Bild oder ein Stapel von Bildern in z-Richtung aufgezeichnet, die Detektion kann aber auch nur für einen einzelnen Punkt in der Probe erfolgen. In jedem Fall werden die detektierten Signale zur Regelgröße R verarbeitet. Beispielsweise kann R als die Summe der mittleren Intensitäten über alle aufgezeichneten Bilder definiert werden. Für die so bestimmte Regelgröße R wird dann verglichen, ob der bei diesem Schritt bestimmte Wert größer als die Werte für die Regelgröße R aus den vorangegangen Schritten ist. Falls dies nicht der Fall ist, so wird die Einstellung der Konfiguration für die nächste Anregungswellenlänge vorgenommen und erneut die Regelgröße R bestimmt. Sollte die Regelgröße R im Vergleich mit den bisher bestimmten Werten für die Regelgröße R maximal sein, so wird die eingestellte Konfiguration gespeichert und erst dann die nächste Wellenlänge eingestellt. Am Ende dieser Variation der Anregungswellenlänge wird das System entsprechend der für den maximalen Wert für die Regelgröße R eingestellten und gespeicherten Einstellungen konfiguriert.

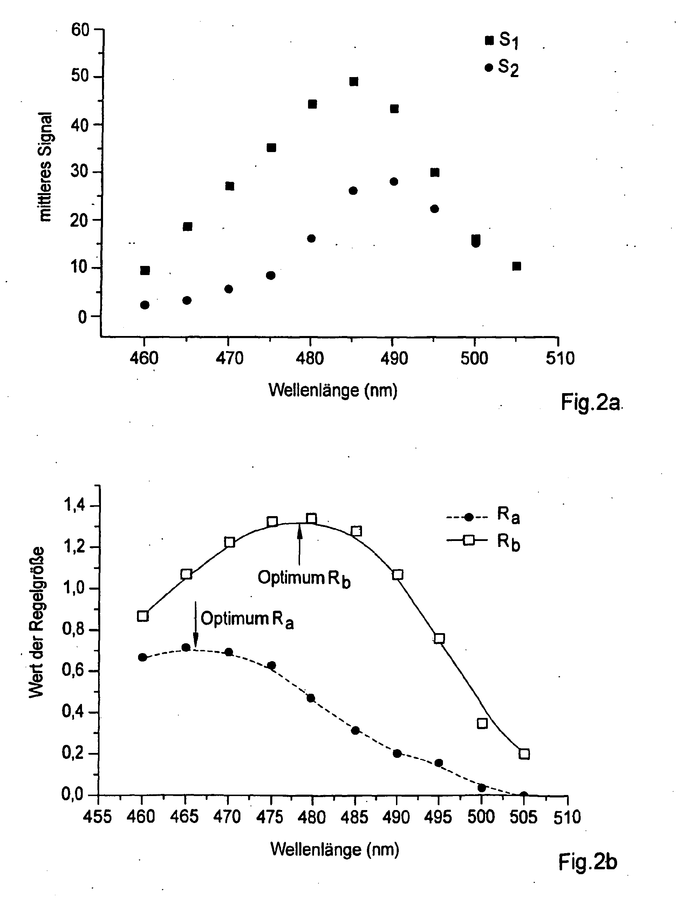

In den Figuren 2a und 2b ist die Bestimmung von Regelgrößen bei der Optimierung der Anregung für den Fall dargestellt, daß eine wellenlängenabhängige Kreuzanregung mehrere Farbstoffe auftritt. Eine direkte Trennung der Signale bzw. Intensitäten ist in einem solchen Fall nicht möglich. Aus diesem Grund wird eine erste Bildregion definiert, aus der im wesentlichen die erwünschte Fluoreszenz detektiert wird, sowie eine zweite Bildregion als Untergrundsregion, aus der vorrangig durch Kreuzungsanregung emittierte Fluoreszenz detektiert wird. Die mittleren Signale bzw. Intensitäten aus beiden Regionen sind in Abhängigkeit von der Wellenlänge in Fig.2a dargestellt. Die Schrittweite betrug hier 5 nm.

Als mögliche Regelgröße in diesem Fall kommt beispielsweise der Kontrast des Signals $S_1$ aus der ersten Bildregion zum mittleren Signal $S_2$ aus der Untergrundsregion,

$$R_a = \frac{S_1 - S_2}{S_1 + S_2} \, ,$$

in Frage. Diese Regelgröße ist in Fig.2b dargestellt.

Um das Signal-Rausch-Verhältnis ebenfalls zu berücksichtigen, kann der Kontrast noch additiv durch die gewichtete, normierte Signalgröße der ersten Bildregion ergänzt werden,

$$R_b = R_a + w \cdot \frac{S_1}{S_1^{\max}} \, .$$

In Fig.2b ist die Regelgröße $R_b$ für ein Gewicht w=1 dargestellt. Als Optimum kann man in erster Näherung den Wert einer der Regelgrößen bei einer tatsächlich eingestellten Wellenlänge λ verwenden, zweckmäßigerweise interpoliert man jedoch für die gemessenen Werte. Im vorliegenden Fall erhält man jeweils interpolierte, optimale Anregungswellenlängen, die dicht bei tatsächlich eingestellten liegen.

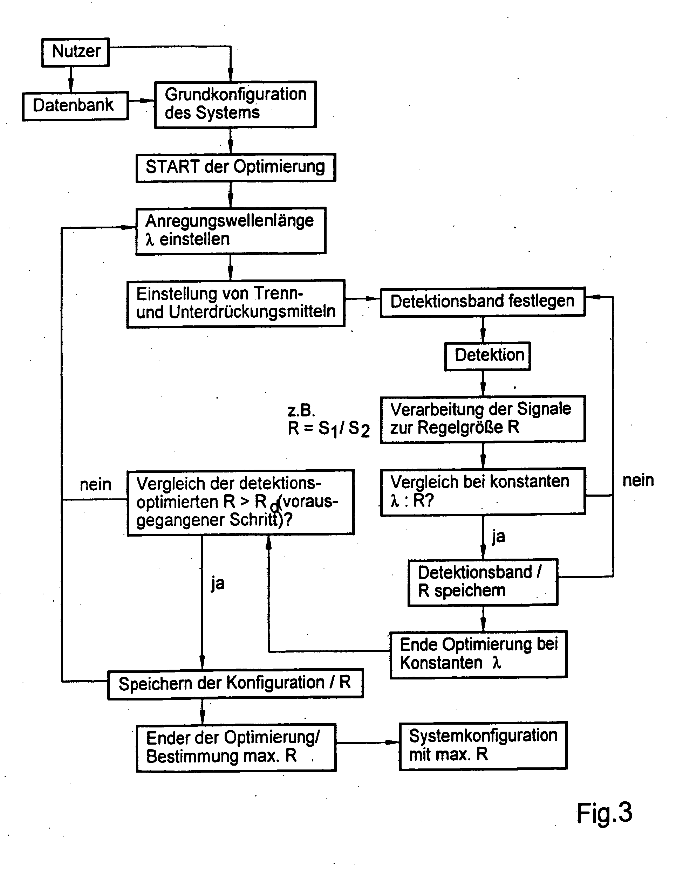

In Fig.3 ist ein gegenüber Fig.1 erweiterter Verfahrensablauf dargestellt, hier wird zusätzlich bei jedem Wellenlängenschritt noch die Lage des Detektionsbandes bzw. der Detektionswellenlänge optimiert. Dies kann beispielsweise durch Einstellen der Trennmittel im Zusammenhang mit dem Einbringen verschiedener Emissionsfilter erfolgen. Für jede Anregungswellenlänge erhält man auf diese Weise eine detektionsoptimierte Regelgröße $R_d$. Am Ende der Optimierung wird - wie auch in dem Fig.1 gezeigten Verfahren - das Maximum der Regelgröße R, beispielsweise mittels Interpolation, bestimmt und das System entsprechend konfiguriert.

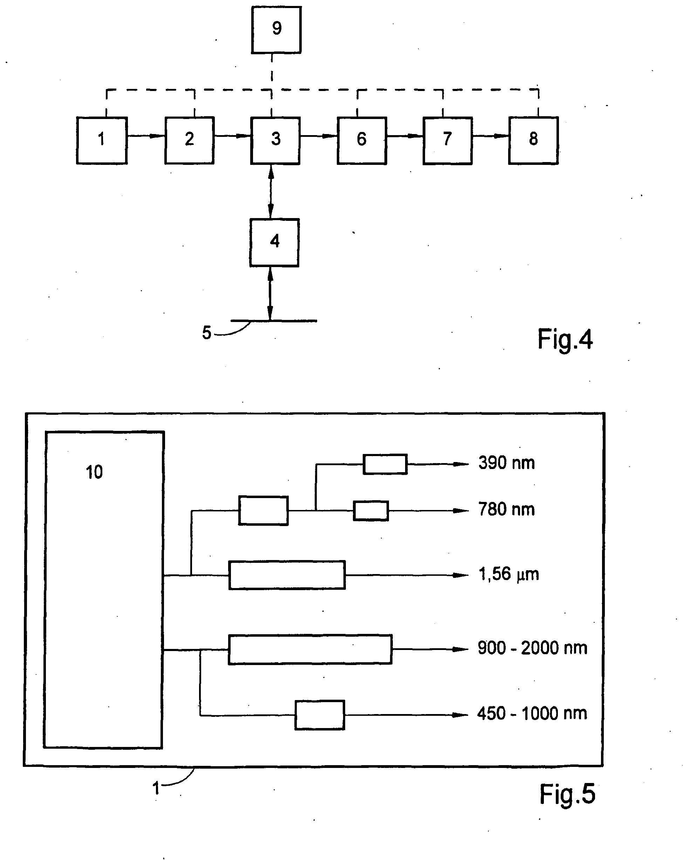

In Fig.4 ist eine Prinzipskizze eines erfindungsgemäßen Mikroskops dargestellt. Links befindet sich eine Beleuchtungsquelle 1, die einen Licht eines Wellenlängenbereichs kontinuierlich emittierenden oder in diesem Bereich durchstimmbaren Laser umfaßt. Von der Beleuchtungsquelle 1 wird Licht abgestrahlt und auf erste Auswahlmittel 2 gelenkt. In diesen findet die Selektion einer Wellenlänge oder eines Wellenlängenbereichs, mehrerer Wellenlängen oder Wellenlängenbereiche des Beleuchtungslichtes statt. Die zur Weiterleitung selektierten Wellenlängen oder Wellenlängenbereiche werden auf Trennmittel 3 gelenkt. Diese dienen zur Trennung der Strahlengänge von Beleuchtungslicht und Detektionslicht, das von der Probe 5 kommt. Die Pfeile deuten dabei die Strahlrichtungen an. Licht der selektierten Wellenlängenbereiche wird über ein Abbildungsmodul 4 auf die Probe 5 gelenkt. Ist die Probe 5 mit Fluoreszenzfarbstoffen markiert, so wird das Beleuchtungslicht absorbiert. Die angeregten Farbstoffe emittieren Licht anderer Wellenlängen, welches zurück zu den Trennmitteln 3 gestrahlt wird. Mittels der Trennmittel 3 wird das Emissionslicht, welches neben Licht der Emissionswellenlängen auch einen Teil des Beleuchtungslichtes enthält, welches von der Probe beispielsweise reflektiert worden ist, auf Unterdrückungsmittel 6 geleitet, wo dieser Anteil des Beleuchtungslichts eliminiert wird. Das Emissionslicht wird dann auf zweite Auswahlmittel 7 gelenkt, bei denen dann ein oder mehrere Wellenlängenbereiche, in denen das Emissionslicht detektiert werden soll, ausgewählt werden. Die Unterdrückungsmittel 6 und die zweiten Auswahlmittel 7 können auch als ein einziges Bauteil ausgeführt sein. Von den zweiten Auswahlmitteln 7 gelangt das Licht schließlich auf Detektionsmittel 8, die beispielsweise einen Photomultiplier (PMT) oder eine CCD-Kamera umfassen können. Das am Rechner anhand der detektierten Werte erzeugte Bild wird gespeichert. Außerdem umfaßt das erfindungsgemäße Mikroskop auch eine Steuereinheit 9, die mit den Beleuchtungsmitteln 1, den ersten Auswahlmitteln 2, den Trennmitteln 3, den Unterdrückungsmitteln 6, den zweiten Auswahlmitteln 7 sowie den Detektionsmitteln 8 verbunden ist. Mittels der Steuereinheit 9 werden die einzelnen Komponenten angesteuert und, wie vorangehend beschrieben, optimal aufeinander abgestimmt. Der Algorithmus kann dabei über Hardwareschaltungen oder über ein geeignetes Programm, oder über eine Kombination von beiden abgearbeitet werden. Auch eine abgestimmte Steuerung per Hand ist möglich.

In Fig.5 ist beispielhaft eine Beleuchtungsquelle 1 dargestellt, mit der sich Licht verschiedener Wellenlängen sowie verschiedener Wellenlängenbereiche erzeugen läßt. Grundlage des Systems ist ein Erbium-Faser-Laser 10, der durch direkte Emission des Verstärkersystems gepulste Laserstrahlung bei 1,56 µm und bei einer spektralen Breite des Pulses von circa 50 nm sowie einer Pulslänge in Bereich von 100 fs oder weniger emittiert. Die Frequenz dieser Strahlung kann dann beispielsweise durch Kontinuumserzeugung in einer dispersionsverschobenen, dotierten Glasfaser oder in nichtlinearen Kristallen - auch in Kombination - konvertiert werden. Diese Methode ist beispielsweise von F. Tauser et al. in Opt. Let. Vol. 29, NO. 5 vom 1. März 2004 beschrieben. Aus der Strahlung des Erbium-Faser-Lasers 10 läßt sich mittels nichtlinearer Methoden der Frequenzvervielfachung direkt Licht der Wellenlängen 780 nm und 390 nm erzeugen. Über nichtlineare Kontinuumserzeugung läßt sich zusätzlich Strahlung einer Pulslänge von etwa 100 fs erzeugen, die in einem Bereich von 900 nm bis 2000 nm durchstimmbar ist. Dies ermöglicht wiederum - ebenfalls durch nichtlineare Methoden der Frequenzverdoppelung - eine Verlagerung des Durchstimmbereichs ins Sichtbare. Prinzipiell ist damit zusätzlich der Spektralbereich von 450 nm bis 1000 nm abgedeckt.

Im Spektralbereich von 450 nm bis 900 nm liegt die spektrale Breite der Laserpulse zwischen circa 10 nm im kurzwelligen und 45 nm im langwelligen Teilbereich. Auf diese Weise erhält man eine einzige Lichtquelle, die Laserstrahlung im Bereich von 390 nm bzw. 225 nm bis 2000 nm liefert. Die verschiedenen Wellenlängenbereiche können simultan zur Verfügung gestellt werden, bei gleichzeitig vorhandener Durchstimmbarkeit innerhalb dieser Bereiche. Mittels der ersten Auswahlmittel 2 kann ein Wellenlängenbereich oder mehrere Wellenlängenbereiche auch extern aufgeteilt werden. In der Anwendung hat dies den Vorteil, daß bei Experimenten, die auf mehrere simultan verfügbare Laserlinien ausgelegt sind, bei der Bildaufnahme kein zeitintensives Abstimmen des Lasers notwendig ist, wie es beispielsweise bei Titan-Saphir-Systemen der Fall ist.

Bei Verwendung eines LSM im Rahmen von biomedizinischen Anwendungen, die hier als ein bedeutendes Beispiel herausgegriffen werden, ist der wesentliche Kontrastmechanismus die Fluoreszenz. Fluoreszenzfarbstoffe haben spezifische Anregungsmechanismen, auf welche die zur Anregung verwendete Laserstrahlung abgestimmt werden muß. Dabei kann ein Fluoreszenzsignal erzeugt werden, d.h. Photonen der Laserlichtquelle werden von der Probe 5 absorbiert, wenn sich die Laseremission und das Anregungsspektrum des in der Probe 5 befindlichen Farbstoffes ganz oder teilweise überlappen. In den meisten Fällen ist das Emissionsspektrum des Fluoreszenzfarbstoffes gegenüber dem Anregungsspektrum aufgrund des Energieverlustes bei der Absorption in den langwelligeren Spektralbereich verschoben. Diese sogenannte Stokes-Verschiebung zwischen den beiden Spektren ist aber oft so gering, daß mit einfachen Mitteln eine vollständige Trennung der Spektren in der Detektion nicht erreicht werden kann und es oft zur teilweisen Überlagerung von Anregungs- und Emissionsspektrum kommt. Daraus ergibt sich, daß im sichtbaren Spektralbereich eine genaue Selektion der zur Probe gelangenden Laserstrahlung notwendig ist, um nicht unnötiges und detektionsseitig nur schwer zu beseitigendes Falschlicht zu produzieren.

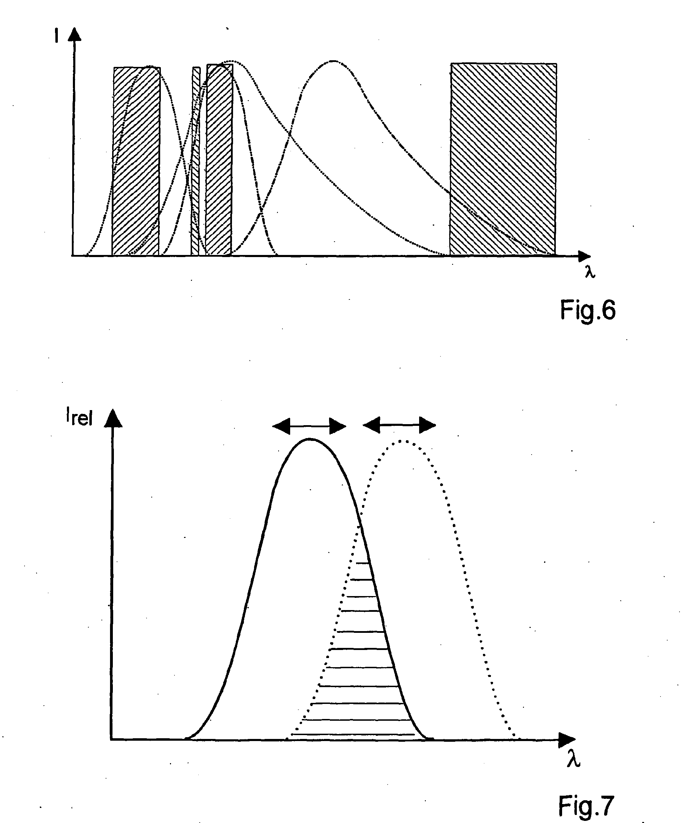

In Fig.6 sind die Verhältnisse bei einer Zweifachfärbung und sich überlappenden Anregungs- und Emissionsspektren der beteiligten Farbstoffe dargestellt. Die Spektren des ersten Farbstoffes sind mit gepunkteten Linien dargestellt, die Spektren des zweiten Farbstoffes mit strichpunktierten Linien. In beiden Fällen überlagern sich Anregungs- und Emissionsspektren, so daß die eindeutige Analyse des Experiments nur bei genauer Kenntnis der jeweiligen Spektren und gleichzeitige Abstimmung von Anregung und Detektion gelingt. Eine breitbandig emittierende oder durchstimmbare Lichtquelle kann also nur dann sinnvoll verwendet werden, wenn es gelingt, trotz der Breitbandigkeit der Anregung kein Falschlicht zu detektieren. In Fig.6 sind die Wellenlängenbereiche für eine optimierte Anregung bzw. Detektion für die beiden Farbstoffe als Rechtecke mit jeweils unterschiedlicher Schraffur dargestellt. Im Experiment muß also ein großer Teil des zur Anregung verwendeten Laserlichts möglichst vollständig unterdrückt werden. Im Zusammenhang mit der eben beschriebenen Beleuchtungsquelle 1 sind dazu weitere Komponenten erforderlich.

Ein Teil wird mittels der ersten Auswahlmittel 2 realisiert, bei denen sich insbesondere die Verwendung von akusto-optischen Filtern anbietet. Dazu zählen die oben erwähnten AOTF und AOM. Die Breite des spektralen Fensters eines AOTF ist je nach Wellenlängenbereich um ca. 30% bis 50% größer als die spektrale Breite der Laserstrahlung, so daß es in diesem Fall immer möglich ist, annähernd die gesamte Energie des Lasers zu nutzen. In Verbindung mit einem breitbandig emittierenden Laser ist ein AOTF vor allem in dem Sinne zur spektralen Selektion geeignet, daß mit dem AOTF spektrale Bereiche außerhalb des gewählten Fensters wirksam unterdrückt werden. Er wirkt zusätzlich als schneller Schalter mit einer Grenzfrequenz von circa 500 kHz und ist in der Lage, die Energie der Laserstrahlung quasi kontinuierlich zu modulieren bzw. einzustellen.

In Fig.7 ist dargestellt, wie man eine Variabilität in der Breite des spektralen Fensters erreichen kann. Bei breitbandig durchstimmbaren Lasern verschiebt man die Zentrumsfrequenzen von Laser und breitbandigem AOTF gegeneinander. Das Spektrum des Lasers ist in Fig.

7 als gleichförmige Intensitätsverteilung in Abhängigkeit von der Wellenlänge mit einer durchgezogenen Linie dargestellt, der Durchlaßbereich des AOTF mit einer gepunkteten Linie. Die beiden Pfeile über den Maxima der beiden Spektren, die mit den Zentrumsfrequenzen zusammenfallen deuten die Verschiebbarkeit der Spektren gegeneinander an. Verschiebt man nun die beiden Zentrumsfrequenzen gegeneinander, so wird nur der Teil des Spektrums im hier schraffiert dargestellten Überlappungsgebiet der beiden spektralen Verteilungen durchgelassen und benutzt. Eine andere Möglichkeit besteht in der Kombination mit einem zusätzlichen Element, wie beispielsweise einem variablen Bandpaß auf Basis fein abgestufter Interferenzfilter. Darüber hinaus ist es auch denkbar, einen breitbandigen und einen schmalbandigen AOTF in einem Aufbau zu integrieren, so daß die Breite des selektierten Spektralbereiches im Rahmen der Eigenschaften der akusto-optischen Technologie und unter Berücksichtigung der spektralen Intensität der Quelle durch Wahl des jeweiligen AOTF wählbar ist.

AOM andererseits weisen eine größere spektrale Breite in bezug auf die eingestellte akusto-optische Frequenz als ein AOTF auf, sie liegt bei etwa 20 nm im nahen Infrarotbereich, und zwischen 20 und 40 nm im sichtbaren Bereich. Ihr durchstimmbarer Bereich beträgt im nahen Infrarot etwa 400 bis 500 nm, im sichbaren Spektrum maximal 150 nm. Der durchstimmbare Bereich ist damit etwas geringer als bei einem AOTF mit etwa 250 nm im sichtbaren Spektralbereich. Um in einem Spektralbereich von beispielsweise 450 bis 700 nm über AOM eine spektrale Selektion und Intensitätsmodulation vorzunehmen, ist daher eine Reihenanordnung mehrerer AOM vorteilhaft.

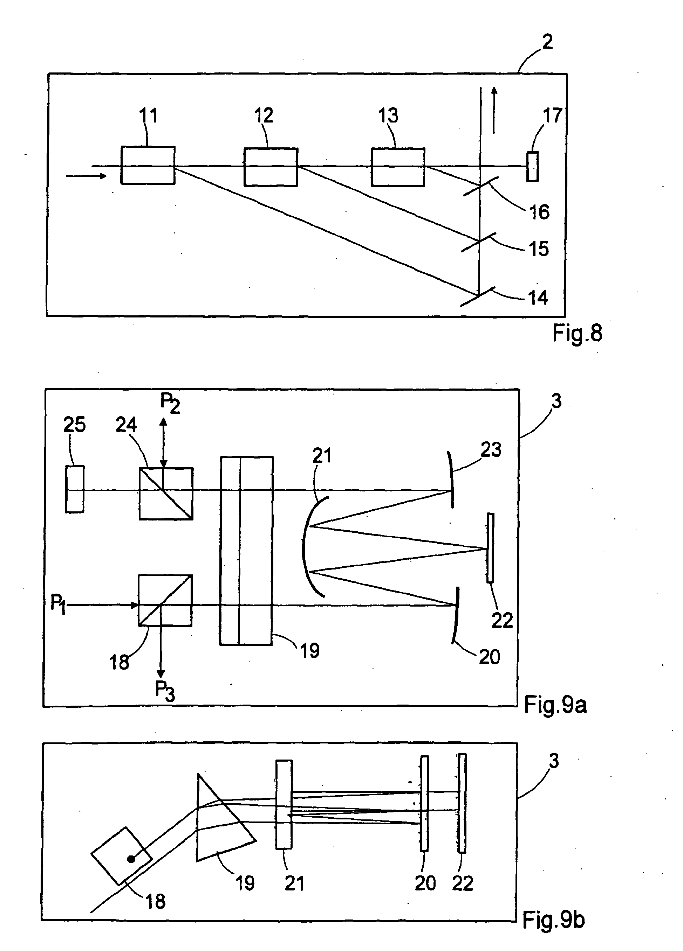

In Fig.8 ist eine solche Reihenanordnung von drei AOM 11, 12, 13 gezeigt. Diese sind dabei so ausgelegt, daß bei Durchlaufen der AOM 11, 12 13 in Strahlrichtung - im Bild von links nach rechts - zunehmend längerwellige Anteile des Spektrums selektiert werden und jeweils die ungebeugte nullte Beugungsordnung des voranstehenden AOM 11 bzw. 12 in das folgende AOM 12 bzw. 13 eintritt. Die durch die AOM 11, 12, 13 von der optischen Achse weg gebeugten Ordnungen werden über einen Spiegel 14 und dichroitische Teiler 15, 16 vereinigt und parallel wieder in den Strahlengang eingekoppelt, wohingegen die ungebeugten Ordnungen von einer Strahlfalle 17 verschluckt werden. Im gezeigten Beispiel könnte das AOM 11 beispielsweise den Bereich von 450 bis 490 nm ablenken, das AOM 12 den Wellenlängenbereich von 490 bis 640 nm und das AOM 13 den Bereich von 640 bis 700 nm.

Mit Hilfe der Trennmittel 3 wird die Anregungsstrahlung von der Emissionsstrahlung getrennt. Bei einem LSM verwendet man in der Regel sogenannte Hauptfarbteiler (HFT). Ein solcher HFT trennt das Anregungs- und das Detektionsspektrum und weist aus diesem Grund funktionsbedingt drei Ein- und Ausgänge, sogenannte Ports auf. Über den ersten Port $P_1$ wird das Licht der Laserquelle effizient zur Probe geleitet. Über den zweiten Port $P_2$ wird das durch die Wechselwirkung des Beleuchtungslichts mit der Probe erzeugte Fluoreszenzlicht spektral vom Laserlicht getrennt. Über den dritten Port schließlich wird das Fluoreszenzlicht effizient zum Detektor geleitet.

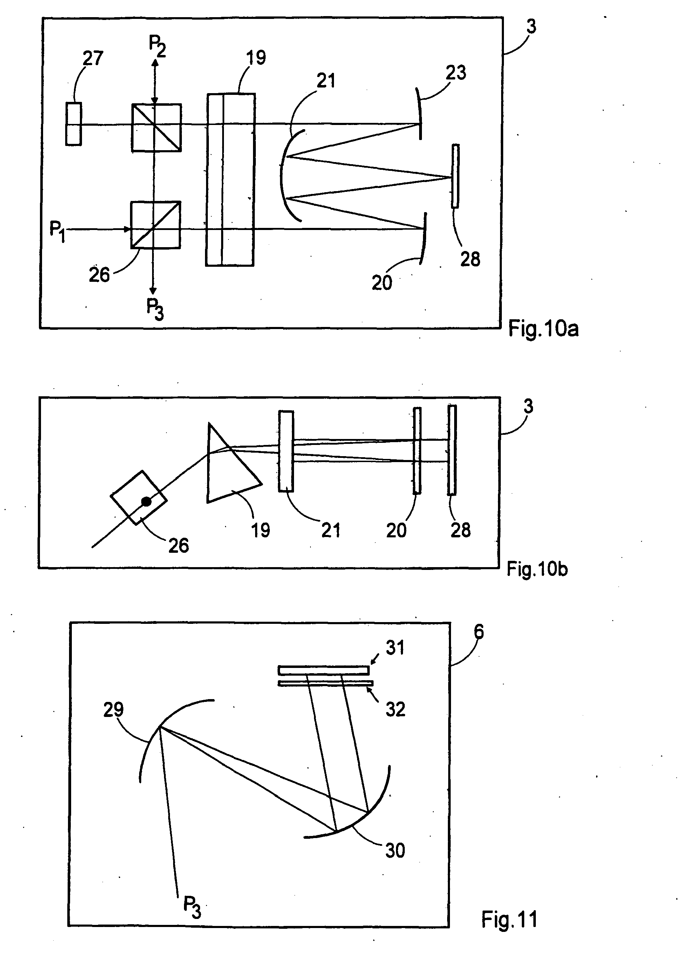

In den Fig.9a und 10a sind diese Ports $P_1$, $P_2$ und $P_3$ sinngemäß eingezeichnet. Beide Figuren stellen mögliche Ausgestaltungen eines solchen HFT in einer Draufsicht dar, die entsprechenden Seitenansichten sind in den Fig. 9b bzw. 10b dargestellt. In beiden Fällen handelt es sich um sogenannte variable Hauptfarbteiler, die flexibel in der Wahl der spektralen Bänder für die Anregung und Detektion sind. Das Anregungslicht und das von der Probe emittierte Fluoreszenzlicht wird jeweils spektral zerlegt und dann wellenlängenabhängig so in seinen Eigenschaften modifiziert, daß es den HFT über den vorgesehenen Port $P_2$ oder $P_3$ verläßt. In der in Fig. 9a und 9b gezeigten Variante des variablen HFT werden Anregungs- und Emissionslicht geometrisch getrennt. Das Beleuchtungslicht trifft zunächst auf einen Strahlteiler 18 und tritt ungehindert durch diesen hindurch. In einem Prisma 19 wird das Licht spektral aufgespalten. Über Spiegel 20 und 21 wird es auf ein Schaltelement 22 gelenkt, bei welchem es sich um ein Spiegelarray mit individuell ansteuerbaren Spiegeln handeln kann. Die Spiegel lenken je nach Wellenlänge den von der Lichtquelle kommenden Strahl über einen weiteren Umlenkspiegel 23, das Prisma 19 und einen weiteren Strahlteiler 24 entweder zur Probe oder in eine Strahlfalle 25.

Anstatt den optischen Weg durch das Schalten mechanischer Elemente zu beeinflussen, kann der HFT auch auf polarisationsoptischer Basis aufgebaut sein. Eine solche Anordnung ist in Fig.10a und 10b gezeigt. Statt der einfachen Strahlteiler aus dem vorigen Beispiel verwendet man hier polarisierende Strahlteiler 26 und 27. Das Schaltelement 28 dient hier nicht der Richtungsablenkung, sondern der Polarisationsdrehung und kann beispielsweise als Flüssigkristallzelle, die als wellenlängenabhängige Verzögerungsplatte fungiert, ausgestaltet sein.

Mittels der Unterdrückungsmittel 6 wird verhindert, daß das zur Anregung verwendete Laserlicht zum Detektor gelangt. Dabei werden sogenannte Emissionsfilter verwendet, deren Ausführungsform bzw. Geometrie sich je nach nachgeschaltetem Detektor unterscheidet.

Eine mögliche Anordnung ist die Verwendung einer spektralselektiven Blende, mit der das zur Anregung verwendete Licht gezielt blockiert wird, wie in Fig. 11 angedeutet. Das vom Hauptfarbteiler kommende Licht wird zunächst über ein Gitter 29 spektral zerlegt und über einen Spiegel 30 auf ein vor einem Zeilendetektor 31 angeordnetes Blendenarray 32 gelenkt. Die einzelnen Blenden des Blendenarrays 32 können beispielsweise als Strahlfallen ausgebildet sein und sind vorzugsweise elektronisch ansteuerbar, so daß sie selektiv den Lichtweg zum Zeilendetektor 31 freigeben oder blockieren. Diese eröffnet zusätzlich die Möglichkeit der gleichzeitigen Detektion von mehreren spektralen Bändern.

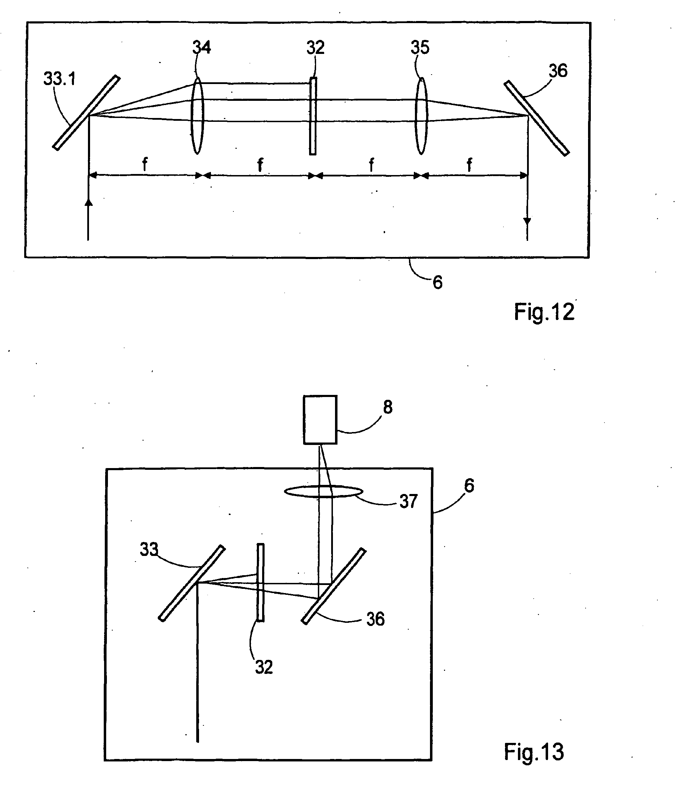

Auch bei einer Detektion mit einem Einzeldetektor kann eine spektral selektive Blockung mit einem Blendenarray erreicht werden. Wenn kein großflächiger, integrierender Detektor zur Anwendung kommt, muß dazu die spektral aufgespaltene Strahlung vor der Detektion wieder zusammengeführt werden. Dies kann durch den Einsatz mindestens eines weiteren Dispersionselements in Kombination mit beispielsweise einer 4-f-Anordnung erfolgen. Ein Beispiel für eine solche Anordnungen ist in Fig. 12 dargestellt. Das vom HFT kommende Licht trifft zunächst auf ein Gitter 31, in dem es spektral zerlegt und auf eine Linse 34 abgebildet wird. Die einzelnen Strahlen treffen dann parallel auf das Blendenarray 32, wo sie je nach Wellenlänge durchgelassen oder blockiert werden. Im gezeigten Beispiel wird der obere Strahl blockiert, während die beiden anderen passieren können. Von einer Linse 35, deren Brennweite ebenso wie bei der Linse 34 f beträgt, werden die Strahlen auf ein Gitter 36 abgebildet, in dem sie wieder zu einem gemeinsamen Stahl vereinigt werden, die Unterdrückungsmittel 6 verlassen und auf einen Einzeldetektor gelenkt werden. Anstelle der Gitter lassen sich auch Prismen verwenden.

Die in Fig.13 verwendete Anordnung ist gegenüber der in Fig.12 gezeigten etwas vereinfacht und beruht darauf, daß es bei der Detektion nicht auf eine exakte Überlagerung der spektralen Anteile ankommt, wenn die konfokale Filterung vor dem blockierenden Element erfolgt. Die spektral zerlegten und durchgelassenen Anteile werden von der Linse 37 direkt auf den Detektor 8 abgebildet. Alternativ zu dem eingesetzten Blendenarray kann auch eine einzelne Blende verwendet werden, die beispielsweise als verschiebbare Schlitz variabler Breite oder einfache Kante ausgeführt sein kann, die dann motorisch an die bekannte und zur Blockung des Anregungsspektrums notwendige Position im Spektrum gefahren wird.

Während das Blendenarray 32 auch die Funktion der zweiten Auswahlmittel 7 übernehmen und zur Auswahl der zu detektierenden Spektralbereiche eingesetzt werden kann, benötigt man im Falle der zuletzt genannten Variante diese zusätzlich. Sie können vor oder hinter den Unterdrückungsmitteln 6 angeordnet sein und aus ähnlichen Komponenten wie die ersten Auswahlmittel 2 bestehen. So eignet sich beispielsweise ein durchstimmbarer Bandpaßfilter auch als Emissionsfilter für Einkanaldetektoren. Der Durchlaßbereich ist dabei auf das Emissionsspektrum des Fluoreszenzfarbstoffes zu optimieren, welches in dem entsprechenden Kanal detektiert werden soll.

Im folgenden werden Anordnungen dargestellt, welche die zur applikativen Nutzung einer breitbandig emittierenden oder breitbandig durchstimmbaren Laserlichtquelle in einem LSM. notwendigen Funktionen durch geeignete Kombination der oben beschriebenen Komponenten erfüllen.

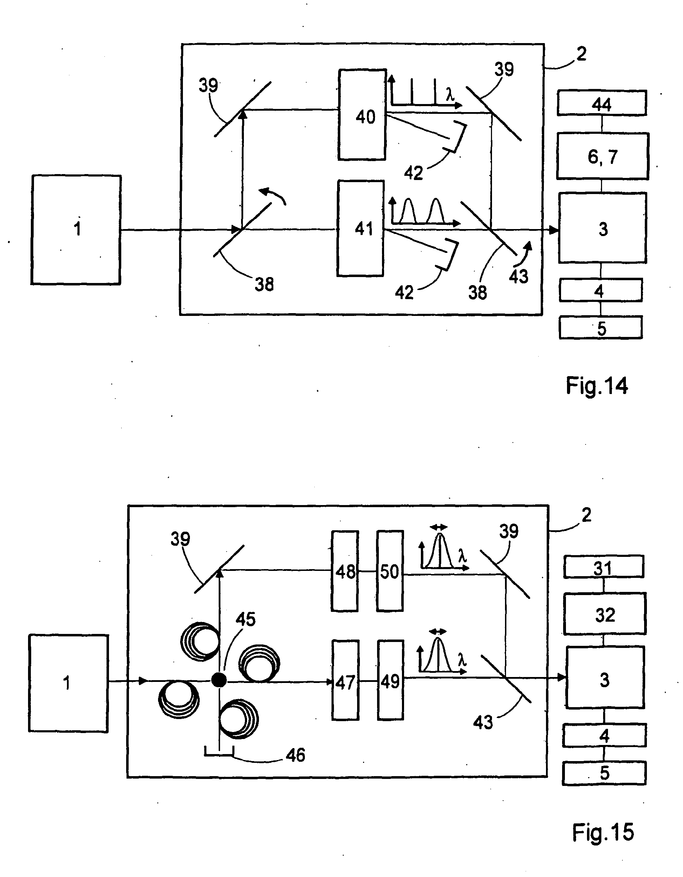

In Fig.14 ist eine Anordnung gezeigt, mit der eine Mehrlinienanregung mit wählbarer spektraler Breite möglich ist. Aus einer Beleuchtungsquelle 1, die einen breitbandig durchstimmbaren bzw. emittierenden Laser enthält, kann mittels eines schaltbaren Spiegels 38 das Licht wahlweise über einen weiteren Spiegel 39 auf einen schmalbandigen AOTF 40 oder einen breitbandigen AOTF 41 geleitet werden. Entsprechend kann die gewünschte spektrale Breite des zur Fluoreszenzanregung verwendeten Lichts gewählt werden, wie durch die schematisch dargestellten Transmissionsspektren angedeutet. Im Falle der Nutzung des breitbandigen AOTF 41 wird die Bandbreite des - vorzugsweise gepulsten - Laserlichts nicht beschnitten, so daß Mehr-Photonen-Prozesse in der Probe ermöglicht werden. Der schaltbare Spiegel 38 ist wahlweise auch als fester Neutralteiler, vorzugsweise mit einem Teilungsverhältnis von 50:50 ausführbar. Ein gleichartiger Spiegel 43 wird verwendet um die Strahlungsanteile aus beiden Kanälen wieder zu vereinigen. Die Vereinigung der beiden Strahlengänge ist auch mittels eines polarisationsoptischen Teilers möglich. Eine weitere Möglichkeit zur Realisierung der oben genannten Funktion ist die Nutzung eines akustooptischen Bauelementes mit schaltbarer spektraler Breite. In diesem Fall entfällt die Strahlaufteilung und -vereinigung. Der nicht genutzte Strahlungsanteil der nullten Beugungsordnung des jeweiligen AOTFs 40, 41 wird jeweils in eine Strahlfalle 42 gelenkt. Die selektierte Strahlung andererseits trifft auf die Trennmittel 3, die einen variablen oder achromatischen Hauptfarbteiler enthalten. Das nach der Wechselwirkung mit der Probe 5 erzeugte Fluoreszenzsignal wird über die zweiten Auswahlmittel 7, die als ein durchstimmbarer Bandpaß ausgelegter Emissionsfilter ausgestaltet sind und auch die Funktion der Unterdrückungsmittel 6 übernehmen, auf einen Einzeldetektor 44 geleitet. Mit dieser Anordnung lassen sich im Rahmen der Möglichkeiten der AOTF 40, 41 mindestens zwei spektrale Bereiche selektieren, wobei gleichzeitig die Möglichkeit der schnellen Hin- und Herschaltung sowie Intensitätsmodulation bzw. Abschwächung besteht.

In Fig.15 ist eine Anordnung zur Mehrlinienanregung mit variabel einstellbarer spektraler Breite dargestellt. Die von der Beleuchtungsquelle 1 kommende Laserstrahlung wird über einen faseroptischen Schalter 45, der auf dem piezoelektrischen Einfahren optischer Bauelemente zur Richtungsablenkung basiert, entweder geradeaus durchgelassen oder um 90° umgelenkt. Der Schalter kann dabei für den Wellenlängenbereich von 450 bis 700 nm, von 780 bis 850 nm oder von 1260 bis 1650 nm ausgelegt sein. Die Schaltzeit liegt im Millisekundenbereich, so daß schnell zwischen den beiden Strahlwegen hin und her geschaltet werden kann, zusätzlich kann die Strahlung auch in eine Strahlfalle 46 gelenkt werden. In den beiden Strahlwegen stehen jeweils unterschiedlich konfigurierbare variable Bandpässe 47, 48 zur Verfügung, so daß es möglich ist, zwei Spektralbereiche mit variabler Breite aus der breitbandigen Laserstrahlung zu selektieren. Da der faseroptische Schalter 45 nur eine Schaltfunktion ausführen kann, wird die Funktion der Intensitätsmodulation bzw. Abschwächung jeweils von einem nachgeschalteten Bauelement, wie beispielsweise Filterrädern 49, 50 wahrgenommen. Der faseroptische Schalter 45 ist auch durch einen schnellschaltbaren Spiegel 38 ersetzbar, oder durch einen festen dichroitischen Teiler, der als Lang- oder Kurzpaß ausgeführt sein kann, wenn die Wellenlängenbereiche festgelegt sind. Die selektierte Strahlung wird durch einen schaltbaren Spiegel 43 wieder in einem Strahl vereinigt. Anstelle des schaltbaren Spiegels 43 kann auch ein dichroitischer Strahlteiler, ein Neutralteiler, oder ein polarisationsoptischer Teiler verwendet werden. Die Strahlung trifft dann auf die Trennmittel 3, die wie zuvor einen durchstimmbaren oder achromatischen HFT enthalten können. Das nach der Wechselwirkung mit der Probe 5 erzeugte Fluoreszenzsignal wird über den Zeilendetektor 31 detektiert. Unterdrückungsmittel 6 und zweite Auswahlmittel 7 werden mittels eines einzigen spektralsensitiven Blendenarray 32 realisiert.

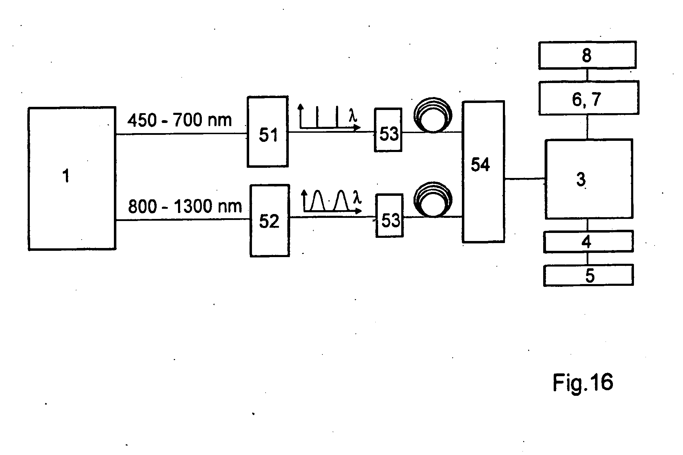

In Fig.16 schließlich ist eine Anordnung dargestellt, bei der Ein- und Mehr-Photonen-Anregungen wahlweise oder kombiniert möglich sind, was insbesondere für Untersuchungsmethoden, bei denen die Probe 5 manipuliert wird, vorteilhaft ist. Von der Beleuchtungsquelle 1 werden zwei breitbandige oder breitbandig durchstimmbare Spektralbereiche simultan zur Verfügung gestellt. Dazu geeignet ist beispielsweise die in Fig. 5 dargestellte Beleuchtungseinheit. Im gezeigten Beispiel wird im Sichtbaren ein Wellenlängenbereich von 450 bis 700 nm und im nahen Infraroten ein Wellenlängenbereich von 800 bis 1300 nm zur Verfügung gestellt. Mindestens die Strahlung im nahen Infraroten liegt in Form von Femtosekunden-Pulsen vor. Beide Wellenlängenbereiche sind in zunächst getrennten Strahlengängen simultan auf die experimentellen Erfordernisse abstimmbar. Im sichtbaren Spektralbereich wird die Wellenlängenselektion dabei vorzugsweise durch einen schmalbandigen AOTF 51 vorgenommen. Im nahen Infrarotbereich wird ein Wellenlängenteilbereich vorzugsweise durch ein AOM 52 ausgewählt. Der AOM 52 hat gegenüber einem AOTF den Vorteil, daß er die spektrale Bandbreite der Femtosekunden-Pulse nicht beschneidet. Mittels der Strahlung im nahen Infraroten ist außer Mehr-Photonen-Anregung bzw. mittels dieser auch die Manipulation der Probe 5 möglich, wobei der sichtbare Spektralbereich in erster Linie zur normalen Bildaufnahme bei der Ein-Photonen-Anregung dient.

Für den Fall, daß die Strahlung im sichtbaren Spektralbereich ebenfalls in Form von Pulsen vorliegt, ist es darüber hinaus auch denkbar, den Strahlengang durch eine weitere Verzweigung zu erweitern, was in Fig. 16 allerdings nicht dargestellt ist. In dieser Verzweigung kann über eine zusätzliche Frequenzverdopplung Strahlung im Wellenlängenbereich von 225 bis 350 nm erzeugt werden. Auf diese Weise erhält man Strahlung im ultravioletten Bereich, mit der besonders effizient bestimmte Manipulationen, wie beispielsweise das sogenannte *Un-*

*caging* durchführbar sind. Idealerweise ist diese Frequenzumwandlung der spektralen Auswahl mittels eines AOTF nachgeschaltet, so daß nur die bereits selektierte Strahlung verdoppelt wird. In alle Strahlengänge kann eine Dispersionskompensationseinheit 53, wie sie aus dem Stand der Technik bekannt ist, vorgesehen sein. Über diese läßt sich die Pulslänge der jeweiligen Laserstrahlung steuern. Aufgrund der zwei getrennt vorliegenden Strahlengänge für die ausgewählten Spektralbereiche müssen die beiden Strahlen durch einen Strahlvereiniger 54 wieder vereinigt werden. Dieser Strahlvereiniger 54 kann nach dem Stand der Technik auf der Basis von dichroitischen Teilerschichten realisiert werden.

Die in Fig.16 gezeigte Anordnung kann auch mit der in Fig.14 gezeigten Anordnung kombiniert werden, so daß zum einen die beiden genannten Wellenlängenbereiche verfügbar sind und zum anderen für den Spektralbereich von 450 bis 700 nm zusätzlich die Option besteht, einen breitbandigen AOTF mit den bereits genannten Vorteilen des Erhalts der energetischen und spektralen bzw. zeitlichen Struktur des Laserlichts einzusetzen.

Mit den vorangehend beschriebenen Verfahren und Anordnungen sind bei Verwendung eines Laser-Scanning-Mikroskops verschiedene biomedizinische Anwendungen denkbar, für die eine Optimierung von Anregungswellenlängen oder Wellenlängenbereichen bzw. der zu detektierenden Wellenlängen oder Wellenlängenbereiche eine wichtige Rolle spielen.

Für die Optimierung der Anregungswellenlänge besonders interessante Anwendungen sind sogenannte *Fluorescence Resonance Energy Transfer*-Experimente (FRET-Experimente). In solchen Experimenten können nur Farbstoffkombinationen verwendet werden, bei denen sich die Emissionswellenlänge des Donorfarbstoffes mit der Anregungswellenlänge des Akzeptorfarbstoffes in einem gewissen Bereich überlagert. Eine Kreuzanregung beider Farbstoffe mit der Anregungswellenlänge des Donorfarbstoffes sollte jedoch so gut wie möglich vermieden werden, da auch bei aufwendigen Kontrollen Artefakte nicht ausgeschlossen werden können und entsprechend weniger aussagekräftige Ergebnisse die Folge sind. Die Auswahl einer optimalen Anregungswelle, d.h. möglichst effizient für den Donorfarbstoff, jedoch ohne den Akzeptor anzuregen, ist ein erheblicher Vorteil, der die Genauigkeit der Messung entsprechend erhöht und damit präzisere Aussagen über die untersuchte Struktur zuläßt. Darüber hinaus eröffnet die freie Wahl der Anregungswellenlänge die Möglichkeit, aus der Anregung mit zwei oder mehr benachbarten Linien und entsprechender rechnerischer Auswertung der aufgenommenen Fluoreszenzbilder eine Trennung von Kreuzanregung und FRET zu erreichen.

Eine andere Methode, bei der die Optimierung der Anregungswelle eingesetzt werden kann, ist die sogenannte *Fluorescence Lifetime Imaging Microscopy* (FLIM). Hier wird die Lebensdauer des angeregten Zustands des Farbstoffes innerhalb der lebenden Zelle gemessen, wobei die Lebensdauer im Nanosekundenbereich liegt. Dabei hängt die Lebensdauer kritisch von der lokalen Umgebung der Probe ab. Für eine genaue Ermittelung der Lebensdauer und ihrer Abhängigkeit von der lokalen Umgebung ist eine effiziente Anregung bei Vermeidung von Kreuzanregungen essentiell. Solche Messungen lassen sich auch mit FRET-Experimenten kombinieren.

Eine weitere Anwendung, bei der die Optimierung der Anregungswellenlänge durch die Verwendung von breitbandig emittierenden oder breitbandig durchstimmbaren Lasern eine wichtige Rolle spielt, ist die Fluoreszenz-Korrelations-Spektroskopie (FCS). Dabei handelt es ich um eine sehr empfindliche Methode, mit der Bindungseigenschaften von Molekülen innerhalb des vom LSM erfaßten konfokalen Volumens ermittelt werden können. Wichtig für ein aussagefähiges Autokorrelationssignal und noch mehr für ein gutes Kreuzkorrelationssignal ist eine gute Abstimmung der Anregungswellenlänge auf den Farbstoff. Diese Abstimmung ermöglicht den Einsatz von geeigneten Farbstoffen, welche nicht unter dem Kriterium "maximale Anregung" sondern unter dem Kriterium "minimales Übersprechen" ausgewählt wurden. Eine Minimierung des Übersprechens, d.h. eine Minimierung der Anregung des langwelligeren Farbstoffes durch spektrale Ausläufer des kurzwelligeren Farbstoffes erlaubt eine exaktere Auswertung des Korrelationssignals, da der zu messende Vorgang nicht verfälscht wird. Auch werden durch die Abstimmmöglichkeit weitere Farbstoffe erschlossen, die geeigneter für den jeweiligen Anwendungsfall sind. Von Bedeutung ist das besonders bei der mit mindestens zwei Farbstoffen operierenden Kreuzkorrelation.

Die Erfindung bietet auch Vorteile bei der Identifizierung von Farbstoffen mit Hilfe spezifisch spektraler Informationen. Bei freier Wahl der Anregungswellenlängen ist es oft möglich, den Intensitätsunterschied des Signals bei zwei oder mehr diskreten Wellenlängen auszuwerten, um das Signal des Farbstoffes zu identifizieren. Vorteilhaft werden die diskreten Wellenlängen dabei simultan zur Verfügung gestellt, da ansonsten die Abstimmung des Lasers auf eine andere Wellenlänge zu lange dauert, um bei lebenden Proben eingesetzt werden zu können. Die Wellenlängen können in kurzer Folge alternativ geschaltet werden, so daß fast ohne Zeitverzögerung das Fluoreszenzsignal identifiziert werden kann. Die Selektivität des Verfahrens ergibt sich dabei aus der freien Wahl der Wellenlängen, wodurch besonders charakteristische Signaturen unter Berücksichtigung der Gesamtheit der in der Probe vorhandenen Farbstoffe genutzt werden können.

Unter Nutzung der Mehr-Photonen-Anregung im Bereich von 700 bis 1000 nm kann das Verfahren auch bei stark streuenden Proben wie Gewebedickschnitten, präpariertem Gewebe oder ganzen Tieren angewendet werden, da auch direkte Detektion - sogenannte Non-Descanned-Detektion - verwendet werden kann. Dies eröffnet beispielsweise den Zugang zu komplexeren Messungen von Ionenkonzentrationen im Gewebeschnitt, da die Signale mit der erforderlichen Zeitauflösung im Millisekundenbereich erfaßt und anschließend gleichzeitig spektral aufgetrennt werden können. Die Geschwindigkeit der Messung ist dabei nicht mehr von der Geschwindigkeit zur Durchstimmung des Lasers abhängig, sondern nur noch von der Geschwindigkeit des Scanners.

Das erfindungsgemäße Verfahren und die erfindungsgemäße Anordnung eignen sich auch vorteilhaft zur Probenmanipulation. Darunter versteht man i.d.R die Anregung von Fluorochromen mit dem Ziel des punktgenauen Ausbleichens, der photochemischen Modifikation - beispielsweise *Uncaging,* Photo-Konversion oder Photo-Aktivierung - oder der physikalischen Zerstörung. Für das *Uncaging* werden beispielsweise sowohl Wellenlängen im ultravioletten Bereich als auch im nahem Infrarotbereich benötigt. Die Bildaufnahme andererseits findet im visuellen Bereich statt. Um den Vorgang schon während der Manipulation verfolgen zu können, möchte man auch hier möglichst simultan arbeiten. Durch die Optimierung der verwendeten Wellenlängen kann sowohl das *Uncaging* als auch die Farbstoffanregung zur Signalerzeugung effizienten durchgeführt werden und damit die Bildgebung optimiert sowie die Probenbelastung minimiert werden.

Die hier genannten Verwendungen stellen nur eine beispielhafte Auswahl dar. Das erfindungsgemäße Verfahren läßt sich ebenso in weiteren, hier nicht explizit genannten aber für den Anwender naheliegenden Untersuchungsmethoden verwenden.

## Bezugszeichenliste

| | |
|---|---|
| 1 | Beleuchtungsquelle |
| 2 | erste Auswahlmittel |
| 3 | Trennmittel |
| 4 | Abbildungsmodul |
| 5 | Probe |
| 6 | Unterdrückungsmittel |
| 7 | zweite Auswahlmittel |
| 8 | Detektionsmittel |
| 9 | Steuereinheit |
| 10 | Erbium-Faser-Laser |
| 11, 12, 13 | AOM |
| 14 | Spiegel |
| 15, 16 | dichroitische Teiler |
| 17 | Strahlfalle |
| 18 | Strahlteiler |
| 19 | Prisma |
| 20, 21 | Umlenkspiegel |
| 22 | Schaltelement |
| 23 | Umlenkspiegel |
| 24 | Strahlteiler |
| 25 | Strahlfalle |
| 26, 27 | Strahlteiler |

| 28 | Schaltelement |
|----|----|
| 29 | Gitter |
| 30 | Spiegel |
| 31 | Zeilendetektor |
| 32 | Blendenarray |
| 33 | Gitter |
| 34, 35 | Linse |
| 36 | Gitter |
| 37 | Linse |
| 38 | schaltbarer Spiegel |
| 39 | Spiegel |
| 40 | schmalbandiger AOTF |
| 41 | breitbandiger AOTF |
| 42 | Strahlfalle |
| 43 | schaltbarer Spiegel |
| 44 | Einzeldetektor |
| 45 | faseroptischer Schalter |
| 46 | Strahlfalle |
| 47, 48 | variabler Bandpaß |
| 49, 50 | Filterrad |
| 51 | schmalbandiger AOTF |
| 52 | AOM |
| 53 | Dispersionskompensationseinheit |
| 54 | Strahlvereiniger |

| $P_1$, P2, $P_3$ | Ports des HFT |
|----|----|
| R | Regelgröße |
| S | Signal |

**Patentansprüche**

1. Verfahren, bei dem Proben mit einem Mikroskop untersucht werden und

   - zur Beleuchtung der Probe räumlich kohärentes Licht in mindestens einem kontinuierlichen oder kontinuierlich durchstimmbaren Wellenlängenbereich erzeugt wird,
   - in Abhängigkeit von der Probe und / oder einer vorgegebenen Untersuchungsmethode ein oder mehrere Wellenlängen oder Wellenlängenbereiche des Beleuchtungslichts ausgewählt werden,
   - die Probe mit Beleuchtungslicht der ausgewählten Wellenlängen oder Wellenlängenbereiche beleuchtet wird,
   - Beleuchtungslicht und von der Probe kommendes Emissionslicht in verschiedene Strahlengänge getrennt werden,
   - von der Probe zurückgestrahltes Beleuchtungslicht im Detektionsstrahlengang vor der Detektion unterdrückt wird,
   - und das Emissionslicht detektiert wird,
   - **dadurch gekennzeichnet, daß**
   - die Auswahl der Wellenlängen oder Wellenlängenbereiche des Beleuchtungslichts mit der Trennung des Detektions- und des Beleuchtungslichts und der Unterdrückung des Beleuchtungslichts so abgestimmt wird, daß eine vorgegebene Regelgröße (R) ein Extremum annimmt,
   - wobei zur Abstimmung die Wellenlängen oder Wellenlängenbereiche des Beleuchtungslichts schrittweise variiert werden, für jeden Schritt ein oder mehrere Bilder detektiert werden und die Regelgröße (R) anhand der detektierten Bilddaten bestimmt wird, und
   - wobei als Regelgröße (R)

      (i) die mittlere Intensität eines detektierten Bildes oder die Summe der mittleren Intensitäten über die detektierten Bilder, oder
      (ii) die Differenz der mittleren Intensitäten zweier oder mehrerer Spektralbereiche in den detektierten Bildern, oder
      (iii) die Differenz der mittleren Intensitäten zweier ausgewählter Regionen in den detektierten Bildern, oder
      (iv) der Kontrast zwischen zwei ausgewählten Bildpunkten oder zwischen einer ersten Bildregion und einer zweiten Bildregion als Untergrundregion in den detektierten Bildern, oder das Signal-Rausch-Verhältnis

verwendet werden, jeweils in Abhängigkeit von den Wellenlängen oder Wellenlängenbereichen des Beleuchtungslichts.

2. Verfahren nach Anspruch 1, **dadurch gekennzeichnet, daß** die Probe rastermikroskopisch abgetastet wird.

3. Verfahren nach einem der vorgenannten Ansprüche, **dadurch gekennzeichnet, daß** die Probe mit einem oder mehreren Farbstoffen markiert wird, die Farbstoffe durch das Beleuchtungslicht zur Emission angeregt werden und das emittierte Licht als Emissionslicht detektiert wird.

4. Verfahren nach einem der vorgenannten Ansprüche, **dadurch gekennzeichnet, daß** die zu detektierenden Wellenlängen oder Wellenlängenbereiche des Emissionslichts mindestens teilweise in den Wellenlängenbereich des Beleuchtungslichts fallen.

5. Verfahren nach einem der vorgenannten Ansprüche, **dadurch gekennzeichnet, daß** die Detektion spektral aufgelöst erfolgt.

6. Verfahren nach Anspruch 5, **dadurch gekennzeichnet, daß** zusätzlich eine Abstimmung in bezug auf den oder die zu detektierenden Spektralbereiche erfolgt, indem diese bei jedem Schritt entsprechend variiert werden.

7. Verfahren nach einem der vorgenannten Ansprüche, **dadurch gekennzeichnet, daß** die Abstimmung anhand einer Referenzprobe durchgeführt wird.

8. Verfahren nach einem der Ansprüche 1 bis 6, **dadurch gekennzeichnet, daß** die Abstimmung an der Probe selbst durchgeführt wird.

9. Verfahren nach einem der vorgenannten Ansprüche, **dadurch gekennzeichnet, daß** die Wellenlängen oder Wellenlängenbereiche des Beleuchtungslichts, die zu Anfang der Abstimmung eingestellt werden, anhand einer Datenbank ausgewählt werden.

10. Verfahren nach einem der vorgenannten Ansprüche 6 bis 9, **dadurch gekennzeichnet, daß** der oder die zu detektierenden Spektralbereiche, die zu Anfang der Abstimmung eingestellt werden, anhand einer Datenbank ausgewählt werden

11. Verfahren nach einem der vorgenannten Ansprüche, **dadurch gekennzeichnet, daß** die Auswahl der Wellenlängen oder Wellenlängenbereiche des Beleuchtungslichts und / oder der zu detektierenden Spektralbereiche automatisch erfolgt.

12. Verfahren nach einem der Ansprüche 1 bis 10, **dadurch gekennzeichnet, daß** die Auswahl der Wellenlängen oder Wellenlängenbereiche des Beleuchtungslichts und / oder der zu detektierenden Spektralbereiche manuell durch einen Benutzer erfolgt.

13. Verfahren nach einem der vorgenannten Ansprüche, sofern als Regelgröße (R) die Differenz der mittleren Intensitäten zweier ausgewählter Regionen in den Bildern verwendet wird, **dadurch gekennzeichnet, daß** aus einer ersten der beiden Regionen das zu detektierende Licht emittiert wird und aus der zweiten der beiden Regionen im wesentlichen störendes Licht emittiert wird.

14. Verfahren nach Anspruch 13, **dadurch gekennzeichnet, daß** in der Regelgröße (R) zusätzlich die gewichtete und normierte Intensität aus der ersten Region berücksichtigt wird.

15. Mikroskop, umfassend

- einen Licht eines Wellenlängenbereich kontinuierlich emittierenden oder in diesem Bereich durchstimmbaren Laser als Beleuchtungsquelle (1),
- erste Auswahlmittel (2) zur Selektion einer Wellenlänge, eines Wellenlängenbereichs, mehrerer Wellenlängen oder Wellenlängenbereiche des Beleuchtungslichts,
- Trennmittel (3) zur Trennung der Strahlengänge von Beleuchtungslicht und von Emissionslicht, das von der Probe (5) kommt,
- Unterdrückungsmittel (6) zur Verhinderung der Detektion von Beleuchtungslicht, das von der Probe (5) zurückgestrahlt wird und in den Detektionsstrahlengang gelangt,
- wobei Beleuchtungsquelle (1), erste Auswahlmittel (2), Trennmittel (3) und Unterdrückungsmittel (6) ansteuerbar und in bezug auf ihre wellenlängenselektiven Eigenschaften variabel einstellbar sind, sowie
- Detektionsmittel (8) zur Detektion des Emissionslichts,
- **dadurch gekennzeichnet, daß**
- eine Steuereinheit (9) zur Ansteuerung und Abstimmung der ersten Auswahlmittel (2), der Trennmittel (3) und der Unterdrückungsmittel (6) aufeinander anhand einer, aus bei schrittweiser Variation der Wellenlängen oder Wellenlängenbereiche des Beleuchtungslichts detektierten Bildern bestimmten, Regelgröße (R) vorgesehen ist, so daß diese ein Extremum annimmt,
- wobei bei der Steuereinheit (9) Eingabemittel zur Eingabe oder Auswahl der Untersuchungsmethode und / oder der Probeneigenschaften vorgesehen sind, und
- wobei die Regelgröße (R) in Abhängigkeit von den Probeneigenschaften

    (i) die mittlere Intensität eines detektierten Bildes oder die Summe der mittleren Intensitäten über die detektierten Bilder, oder
    (ii) die Differenz der mittleren Intensitäten zweier oder mehrerer Spektralbereiche in den detektierten Bildern, oder
    (iii) die Differenz der mittleren Intensitäten zweier ausgewählter Regionen in den detektierten Bildern, oder
    (iv) der Kontrast zwischen zwei ausgewählten Bildpunkten oder zwischen einer ersten Bildregion und einer zweiten Bildregion als Untergrundregion in den detektierten Bildern, oder das Signal-Rausch-Verhältnis,

ist, jeweils in Abhängigkeit von den Wellenlängen oder Wellenlängenbereichen des Beleuchtungslichts.

16. Mikroskop nach Anspruch 15, **dadurch gekennzeichnet, daß** das Mikroskop als Laser-Scanning-Mikroskop ausgestaltet ist.

17. Mikroskop nach einem der Ansprüche 15 oder 16, **dadurch gekennzeichnet, daß** die Steuereinheit (9) zur automatischen Abstimmung von den ersten Auswahlmitteln (2), den Trennmitteln (3) und den Unterdrückungsmitteln (6) ausgelegt ist.

**18.** Mikroskop nach einem der Ansprüche 15 bis 17, **dadurch gekennzeichnet, daß** Mittel zur spektralen Zerlegung des Emissionslichts vorgesehen sind.

**19.** Mikroskop nach Anspruch 18, **dadurch gekennzeichnet, daß** zweite Auswahlmittel (7) zur Auswahl eines oder mehrere Wellenlängenbereiche, in denen das Emissionslicht detektiert wird, vorgesehen sind.

**20.** Mikroskop nach Anspruch 19, **dadurch gekennzeichnet, daß** die Steuereinheit (9) zur Ansteuerung und Abstimmung der zweiten Auswahlmittel (7) mit den ersten Auswahlmitteln (2), den Trennmitteln (3) und den Unterdrückungsmitteln (6) anhand der Regelgröße (R) ausgelegt ist.

**21.** Mikroskop nach einem der Ansprüche 15 bis 20, **dadurch gekennzeichnet, daß** bei den ersten Auswahlmitteln (2) ein oder mehrere akusto-optische Filter, insbesondere AOTF oder AOM, vorgesehen sind.

**22.** Mikroskop nach Anspruch 21, **dadurch gekennzeichnet, daß** die Filter in Reihe geschaltet sind, wobei jeder der Filter eine andere Wellenlänge oder einen anderen Wellenlängenbereich auskoppelt.

**23.** Mikroskop nach Anspruch 22, **dadurch gekennzeichnet, daß** Mittel zur Zusammenführung der ausgekoppelten Wellenlängen oder Wellenlängenbereiche vorgesehen sind.

**24.** Mikroskop nach Anspruch 23, **dadurch gekennzeichnet, daß** die Mittel zur Zusammenführung dichroitische Strahlteiler, vorzugsweise als Lang-, Kurz- oder Bandpaß ausgeführt, umfassen.

**25.** Mikroskop nach einem der Ansprüche 15 bis 24, **dadurch gekennzeichnet, daß** bei den ersten Auswahlmitteln ein oder mehrere variabel einstellbare Flüssigkristallfilter vorgesehen sind.

**26.** Mikroskop nach einem der Ansprüche 15 bis 25, **dadurch gekennzeichnet, daß** bei den ersten Auswahlmitteln ein oder mehrere variabel einstellbare Bandpaßfilter vorgesehen sind.

**27.** Mikroskop nach einem der Ansprüche 15 bis 26, **dadurch gekennzeichnet, daß** bei den Trennmitteln (3) ein flexibler Hauptfarbteiler vorgesehen ist, in dem Beleuchtungslicht und Emissionslicht spektral zerlegt und in Abhängigkeit von der Wellenlänge modifiziert und umgelenkt werden.

**28.** Mikroskop nach einem der Ansprüche 15 bis 27, **dadurch gekennzeichnet, daß** bei den Trennmitteln (3) ein achromatischer Hauptfarbteiler vorgesehen ist, in dem Beleuchtungslicht und Emissionslicht in räumlich unterschiedliche Bereiche abgebildet und umgelenkt werden.

**29.** Mikroskop nach einem der Ansprüche 15 bis 28, **dadurch gekennzeichnet, daß** bei den Unterdrükkungsmitteln (6) eine spektral selektive Blende (32) vorgesehen ist.

**30.** Mikroskop nach Anspruch 29, **dadurch gekennzeichnet, daß** die Blende (32) variabel einstellbar ist.

**31.** Anwendung des Verfahrens mit Verfahrensschritten nach den Ansprüchen 1 bis 14 in der Fluoreszenzspektroskopie, in der Fluoreszenzkorrelationsspektroskopie, bei FRET-Experimenten, bei FLIM-Experimenten, bei der Untersuchung von Multiphotonen-Anregungen, bei der Manipulation von Proben, oder zur Identifizierung von Farbstoffen.

**Claims**

**1.** Process wherein specimens are examined with a microscope and

> - for the purpose of illuminating the specimen, spatially coherent light is generated within at least one continuous or continuously tuneable wavelength range,
> - depending on the specimen and/or on a predetermined examination method, one or more wavelengths or wavelength ranges of the illumination light is/are selected,
> - the specimen is illuminated with illumination light of the selected wavelengths or wavelength ranges,
> - illumination light and emission light coming from the specimen are separated into different beam paths,
> - illumination light reradiated from the specimen in the detection beam path is suppressed prior to detection,
> - and the emission light is detected,
> - **characterised in that**
> - the selection of the wavelengths or wavelength ranges of the illumination light is coordinated with the separation of the detection light and of the illumination light and with the suppression of the illumination light in such a way that a predetermined controlled variable (R) assumes an extreme value,
> - wherein the wavelengths or wavelength ranges of the illumination light are varied stepwise for the purpose of tuning, for each step one or more images is/are detected and the controlled variable (R) is determined on the basis of the detected image data, and wherein by way of controlled variable (R) use is made of

> (i) the mean intensity of a detected image or the sum of the mean intensities over the detected images, or
> (ii) the difference of the mean intensities of two or more spectral ranges in the detected images, or
> (iii) the difference of the mean intensities of two selected regions in the detected images, or
> (iv) the contrast between two selected image points or between a first image region and a second image region by way of background region in the detected images, or the signal-to-noise ratio,

> in each instance depending on the wavelengths or wavelength ranges of the illumination light.

2. Process according to Claim 1, **characterised in that** the specimen is scanned by scanning microscopy.

3. Process according to one of the preceding claims, **characterised in that** the specimen is labelled with one or more dyes, the dyes are excited to emit by the illumination light, and the emitted light is detected as emission light.

4. Process according to one of the preceding claims, **characterised in that** the wavelengths or wavelength ranges to be detected of the emission light fall at least partly within the wavelength range of the illumination light.

5. Process according to one of the preceding claims, **characterised in that** the detection is effected in spectrally resolved manner.

6. Process according to Claim 5, **characterised in that** a tuning with respect to the spectral range(s) to be detected is additionally effected by said ranges being varied appropriately in each step.

7. Process according to one of the preceding claims, **characterised in that** the tuning is carried out on the basis of a reference specimen.

8. Process according to one of Claims 1 to 6, **characterised in that** the tuning is carried out in respect of the specimen itself.

9. Process according to one of the preceding claims, **characterised in that** the wavelengths or wavelength ranges of the illumination light, which are set at the beginning of the tuning, are selected on the basis of a database.

10. Process according to one of the preceding Claims 6 to 9, **characterised in that** the spectral range(s) to be detected, which is/are set at the beginning of the tuning, is/are selected on the basis of a database.

11. Process according to one of the preceding claims, **characterised in that** the selection of the wavelengths or wavelength ranges of the illumination light and/or of the spectral ranges to be detected is effected automatically.

12. Process according to one of Claims 1 to 10, **characterised in that** the selection of the wavelengths or wavelength ranges of the illumination light and/or of the spectral ranges to be detected is effected manually by a user.

13. Process according to one of the preceding claims, to the extent that the difference of the mean intensities of two regions in the images is used by way of controlled variable (R), **characterised in that** the light to be detected is emitted from a first of the two regions, and substantially interfering light is emitted from the second of the two regions.

14. Process according to Claim 13, **characterised in that** the weighted and normalised intensity from the first region is additionally taken into account in the controlled variable (R).

15. Microscope, comprising

> - a laser continuously emitting light of a wavelength range or tuneable within this range by way of light source (1),
> - first selection means (2) for selecting a wavelength, a wavelength range, several wavelengths or wavelength ranges of the illumination light,
> - separating means (3) for separating the beam paths of illumination light and of emission light that comes from the specimen (5),
> - suppression means (6) for preventing the detection of illumination light that is reradiated from the specimen (5) and passes into the detection beam path,
> - wherein illumination source (1), first selection means (2), separating means (3) and suppression means (6) are drivable and are variably adjustable with respect to their wavelength-selective properties, and also
> - detection means (8) for detecting the emission light,
> - **characterised in that**
> - a control unit (9) is provided for driving and tuning the first selection means (2), the separating means (3) and the suppression means (6) to one another on the basis of a controlled variable (R), determined from images detected in the course of stepwise variation of the wavelengths or wavelength ranges of the illumination light, so that said controlled variable assumes an extreme value,

- wherein input means are provided in the control unit (9) for input or selection of the examination method and/or of the properties of the specimen, and

- wherein the controlled variable (R) is, depending on the properties of the specimen,

> (i) the mean intensity of a detected image or the sum of the mean intensities over the detected images, or
> (ii) the difference of the mean intensities of two or more spectral ranges in the detected images, or
> (iii) the difference of the mean intensities of two selected regions in the detected images, or
> (iv) the contrast between two selected image points or between a first image region and a second image region by way of background region in the detected images, or the signal-to-noise ratio,

> in each instance depending on the wavelengths or wavelength ranges of the illumination light.

16. Microscope according to Claim 15, **characterised in that** the microscope is configured as a laser scanning microscope.

17. Microscope according to one of Claims 15 or 16, **characterised in that** the control unit (9) is designed for automatic tuning of the first selection means (2), of the separating means (3) and of the suppression means (6).

18. Microscope according to one of Claims 15 to 17, **characterised in that** means are provided for spectral dispersion of the emission light.

19. Microscope according to Claim 18, **characterised in that** second selection means (7) are provided for selecting one or more wavelength ranges within which the emission light is detected.

20. Microscope according to Claim 19, **characterised in that** the control unit (9) is designed for driving and coordinating the second selection means (7) with the first selection means (2), with the separating means (3) and with the suppression means (6) on the basis of the controlled variable (R).

21. Microscope according to one of Claims 15 to 20, **characterised in that** one or more acousto-optical filters, in particular AOTF or AOM, is/are provided in the first selection means (2).

22. Microscope according to Claim 21, **characterised in that** the filters are connected in series, each of the filters decoupling a different wavelength or a different wavelength range.

23. Microscope according to Claim 22, **characterised in that** means are provided for combining the decoupled wavelengths or wavelength ranges.

24. Microscope according to Claim 23, **characterised in that** the means for combining include dichroic beam-splitters, preferentially implemented as longpass filters, short-pass filters or band-pass filters.

25. Microscope according to one of Claims 15 to 24, **characterised in that** one or more variably adjustable liquid-crystal filters is/are provided in the first selection means.

26. Microscope according to one of Claims 15 to 25, **characterised in that** one or more variably adjustable band-pass filters is/are provided in the first selection means.

27. Microscope according to one of Claims 15 to 26, **characterised in that** in the separating means (3) a flexible main colour-splitter is provided in which illumination light and emission light are spectrally dispersed and, depending on the wavelength, modified and deflected.

28. Microscope according to one of Claims 15 to 27, **characterised in that** in the separating means (3) an achromatic main colour-splitter is provided in which illumination light and emission light are projected and deflected into spatially differing ranges.

29. Microscope according to one of Claims 15 to 28, **characterised in that** a spectrally selective diaphragm (32) is provided in the suppression means (6).

30. Microscope according to Claim 29, **characterised in that** the diaphragm (32) is variably adjustable.

31. Use of the process with process steps according to Claims 1 to 14 in fluorescence spectroscopy, in fluorescence correlation spectroscopy, in FRET experiments, in FLIM experiments, in the investigation of multi-photon excitations, in the manipulation of specimens, or for identifying dyes.

## Revendications

1. Procédé dans lequel des échantillons sont examinés avec un microscope et

   - pour l'éclairage de l'échantillon, une lumière spatialement cohérente est générée dans au moins un domaine de longueurs d'ondes continu ou variable de manière continue,
   - en fonction de l'échantillon et/ou d'une méthode d'examen prédéterminée, une ou plusieurs longueurs d'ondes ou domaines de longueurs d'ondes de la lumière d'éclairage sont sélectionnés,
   - l'échantillon est éclairé avec la lumière d'éclairage présentant les longueurs d'ondes ou les domaines de longueurs d'ondes sélectionnés,
   - la lumière d'éclairage et la lumière d'émission de l'échantillon sont séparées en différentes trajectoires,
   - la lumière d'éclairage réfléchie par l'échantillon est atténuée dans la trajectoire de détection avant la détection,
   - et la lumière d'émission est détectée,

   **caractérisé en ce que**

   - la sélection des longueurs d'ondes ou des domaines de longueurs d'ondes de la lumière d'éclairage est ajustée avec la séparation de la lumière de détection et de la lumière d'éclairage et l'atténuation de la lumière d'éclairage, de façon à ce qu'une grandeur de régulation (R) atteigne un extremum,
   - moyennant quoi, pour l'ajustement, les longueurs d'ondes ou les domaines de longueurs d'ondes de la lumière d'éclairage sont modifiées pas-à-pas, pour chaque pas, une ou plusieurs images sont détectées et la grandeur de régulation (R) est déterminée à l'aide des données d'image détectées et
   - moyennant quoi la grandeur de régulation (R) peut être

      (i) l'intensité moyenne d'une image détectée ou la somme des intensités moyennes sur les images détectées, ou
      (ii) la différence des intensités moyennes de deux domaines spectraux ou plus dans les images détectées ou
      (iii) la différence des intensités moyennes de deux régions sélectionnées dans les images détectées ou
      (iv) le contraste entre deux points d'images sélectionnés ou entre une première région d'image et une deuxième région d'image en tant que région de fond dans les images détectées, ou le rapport signal-bruit

   en fonction des longueurs d'ondes ou des domaines de longueurs d'ondes de la lumière d'éclairage.

2. Procédé selon la revendication 1, **caractérisé en ce que** l'échantillon est balayé avec une trame microscopique.

3. Procédé selon l'une des revendications précédentes, **caractérisé en ce que** l'échantillon est marqué avec un ou plusieurs colorants, les colorants sont excités par la lumière d'éclairage et la lumière émise est détectée en tant que lumière d'émission.

4. Procédé selon l'une des revendications précédentes, **caractérisé en ce que** les longueurs d'ondes ou domaines de longueurs d'ondes de la lumière d'émission à détecter tombent au moins partiellement dans le domaine de longueur d'onde de la lumière d'éclairage.

5. Procédé selon l'une des revendications précédentes, **caractérisé en ce que** la détection a lieu de manière spectrale.

6. Procédé selon la revendication 5, **caractérisé en ce que**, en outre, un ajustement a lieu en fonction du ou des domaines spectraux à détecter, ceux-ci étant modifiés de manière correspondante à chaque pas.

7. Procédé selon l'une des revendications précédentes, **caractérisé en ce que** l'ajustement est effectué à l'aide d'un échantillon de référence.

8. Procédé selon l'une des revendications 1 à 6, **caractérisé en ce que** l'ajustement est effectué sur l'échantillon lui-même.

9. Procédé selon l'une des revendications précédentes, **caractérisé en ce que** les longueurs d'ondes ou les domaines de longueurs d'ondes de la lumière d'éclairage, qui sont réglés au début de l'ajustement, sont sélectionnés à l'aide d'une base de données.

10. Procédé selon l'une des revendications précédentes 6 à 9, **caractérisé en ce que** le ou les domaines spectraux à détecter, qui sont réglés au début de l'ajustement, sont sélectionnés à l'aide d'une base de données.

11. Procédé selon l'une des revendications précédentes, **caractérisé en ce que** la sélection des longueurs d'ondes ou des domaines de longueurs d'ondes de la lumière d'éclairage et/ou des domaines spectraux à détecter est effectuée automatiquement.

**12.** Procédé selon l'une des revendications 1 à 10, **caractérisé en ce que** la sélection des longueurs d'ondes ou des domaines de longueurs d'ondes de la lumière d'éclairage et/ou des domaines spectraux à détecter est effectuée manuellement par un utilisateur.

**13.** Procédé selon l'une des revendications précédentes, dans lequel la grandeur de régulation (R) peut être la différence des intensités moyennes de deux régions sélectionnées dans les images, **caractérisé en ce que** la lumière à détecter est émise à partir de la première des deux régions et la lumière parasite est émise principalement à partir de la deuxième des deux régions.

**14.** Procédé selon la revendication 13, **caractérisé en ce que**, dans la grandeur de régulation (R), l'intensité pondérée et normalisée de la première région est en outre prise en compte.

**15.** Microscope comprenant

- un laser émettant de manière continue une lumière dans un domaine de longueurs d'ondes ou ajustable dans ce domaine en tant que source d'éclairage (1),
- des premiers moyens de sélection (2) permettant la sélection d'une longueur d'onde, d'un domaine de longueurs d'ondes, de plusieurs longueurs d'ondes ou domaines de longueurs d'ondes de la lumière d'éclairage,
- des moyens de séparation (3) permettant la séparation des trajectoires de faisceaux de la lumière d'éclairage et de la lumière d'émission provenant de l'échantillon (5),
- des moyens d'atténuation (6) permettant d'empêcher la détection de la lumière d'éclairage réfléchie par l'échantillon (5) et qui arrive dans la trajectoire de détection,
- moyennant quoi la source d'éclairage (1), les premiers moyens de sélection (2), les moyens de séparation (3) et les moyens d'atténuation (6) sont contrôlables et réglables de manière variable en ce qui concerne leurs propriétés de sélection des longueurs d'ondes, et
- des moyens de détection (8) permettant la détection de la lumière d'émission,

**caractérisé en ce que**

- une unité de commande (9) pour le contrôle et l'ajustement des premiers moyens de sélections (2), des moyens de séparation (3) et des moyens d'atténuation (6) les uns par apport aux autres à l'aide d'une grandeur de régulation (R) déterminée à partir d'images détectées lors de la variation pas-à-pas des longueurs d'ondes ou des domaines de longueurs d'ondes de la lumière d'éclairage, est prévue, de façon à ce que cette grandeur de régulation atteigne un extremum,
- moyennant quoi, dans l'unité de commande (9), sont prévus des moyens d'entrée permettant la saisie ou la sélection de la méthode d'examen et/ou des propriétés de l'échantillon et
- moyennant quoi la grandeur de régulation (R) est, selon les propriétés de l'échantillon :

(i) l'intensité moyenne d'une image détectée ou la somme des intensités moyennes sur les images détectées ou
(ii) la différence des intensités moyennes de deux domaines spectraux ou plus dans les images détectées ou
(iii) la différence des intensités moyennes de deux régions sélectionnées dans les images détectées ou
(iv) le contraste entre deux points d'images sélectionnés ou entre une première région d'image et une deuxième région d'image en tant que région de fond dans les images détectées, ou le rapport signal-bruit

en fonction des longueurs d'ondes ou des domaines de longueurs d'ondes de la lumière d'éclairage.

**16.** Microscope selon la revendication 15, **caractérisé en ce que** le microscope est conçu comme un microscope à balayage laser.

**17.** Microscope selon l'une des revendications 15 ou 16, **caractérisé en ce que** l'unité de commande (9) est conçue pour l'ajustement automatique des premiers moyens de sélection (2), des moyens de séparation (3) et des moyens d'atténuation (6).

**18.** Microscope selon l'une des revendications 15 à 17, **caractérisé en ce que** des moyens de décomposition spectrale de la lumière d'émission sont prévus.

**19.** Microscope selon la revendication 18, **caractérisé en ce que** des deuxièmes moyens de sélection (7) sont prévus pour la sélection d'un ou plusieurs domaines de longueurs d'ondes, dans lesquels la lumière d'émission est détectée.

**20.** Microscope selon la revendication 19, **caractérisé en ce que** l'unité de commande (9) est conçue pour le contrôle et l'ajustement des deuxièmes moyens de sélection (7) avec les premiers moyens de sélection (2), les moyens de séparation (3) et les moyens d'atténuation (6) à l'aide de la grandeur de régulation (R).

**21.** Microscope selon l'une des revendications 15 à 20, **caractérisé en ce que** dans les premiers moyens de sélection (2), un ou plusieurs filtres acousto-optiques, plus particulièrement AOTF ou AOM, sont prévus.

**22.** Microscope selon la revendication 21, **caractérisé en ce que** les filtres sont branchés en série, moyennant quoi chaque filtre élimine une longueur d'onde différente ou un domaine de longueurs d'ondes différent.

**23.** Microscope selon la revendication 22, **caractérisé en ce que** des moyens sont prévus pour le regroupement des longueurs d'ondes ou domaines de longueurs d'ondes éliminés.

**24.** Microscope selon la revendication 23, **caractérisé en ce que** les moyens de regroupement comprennent des séparateurs de faisceaux dichroïques, de préférence conçus comme des filtres passe-haut, passe-bas ou passe-bandes.

**25.** Microscope selon l'une des revendications 15 à 24, **caractérisé en ce que** dans les premiers moyens de sélection, un ou plusieurs filtres à cristaux liquides réglables sont prévus.

**26.** Microscope selon l'une des revendications 15 à 25, **caractérisé en ce que** dans les premiers moyens de sélection, un ou plusieurs filtres passe-bandes réglables sont prévus.

**27.** Microscope selon l'une des revendications 15 à 26, **caractérisé en ce que** dans les moyens de séparation (3), un séparateur de couleurs primaires flexible est prévu, dans lequel la lumière d'éclairage et la lumière d'émission sont décomposées de manière spectrale et modifiées et déviées en fonction de la longueur d'onde.

**28.** Microscope selon l'une des revendications 15 à 27, **caractérisé en ce que** dans les moyens de séparation (3) un séparateur de couleurs primaires achromatique est prévu, dans lequel la lumière d'éclairage et la lumière d'émission sont représentées dans des domaines spatialement différents et déviées.

**29.** Microscope selon l'une des revendications 15 à 28, **caractérisé en ce que** dans les moyens d'atténuation (6), un diaphragme spectral sélectif (32) est prévu.

**30.** Microscope selon la revendication 29, **caractérisé en ce que** le diaphragme (32) est réglable de manière variable.

**31.** Utilisation du procédé avec des étapes de procédé selon les revendications 1 à 14 dans la spectroscopie à fluorescence, dans la spectroscopie à corrélation de fluorescence, lors d'expériences FRET, lors d'expériences FLIM, lors de l'examen d'excitations multiphotons, lors de la manipulation d'échantillons ou pour l'identification de colorants.

Fig.1

Fig.2a

Fig.2b

Nutzer

Datenbank

Grundkonfiguration
des Systems

START der Optimierung

Anregungswellenlänge
λ einstellen

Einstellung von Trenn-
und Unterdrückungsmitteln

Detektionsband festlegen

Detektion

z.B.
$R = S_1 / S_2$

Verarbeitung der Signale
zur Regelgröße R

nein

Vergleich der detektionsoptimierten R > R$_d$(vorausgegangener Schritt)?

Vergleich bei konstanten
λ : R?

nein

ja

ja

Detektionsband /
R speichern

Speichern der Konfiguration / R

Ende Optimierung bei
Konstanten λ

Ender der Optimierung/
Bestimmung max. R

Systemkonfiguration
mit max. R

Fig.3

Fig.4

Fig.5

390 nm

780 nm

1,56 µm

900 - 2000 nm

450 - 1000 nm

Fig.6

Fig.7

Fig.8

Fig.9a

Fig.9b

Fig.10a

Fig.10b

Fig.11

Fig.12

Fig.13

Fig.14

Fig.15

Fig.16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6611643 B
- US 6796699 B
- DE 10115509 A1
- US 6654166 B
- DE 10339311 A1
- DE 1915102
- DE 10017825
- DE 19835070 A1
- DE 19510102
- DE 19842288
- DE 10340020

**In der Beschreibung aufgeführte Nicht-Patentliteratur**

- *Optical Letters,* vol. 29, 516-518
- **TSIEN.** *Annu.Rev.Neurosci,* 1989, vol. 12, 227ff
- **F. TAUSER et al.** *Opt. Let.,* 01. Marz 2004, vol. 29 (5